# EUROPEAN PATENT APPLICATION

(11) **EP 4 852 398 A1**
(43) Date of publication of application: **09.12.2026**
(21) Application number: 25757716.3
(22) Date of filing: 18.02.2025
(51) Int. Cl.: H04L 47/76

(54) **NETWORK RESOURCE PARTITION INFORMATION REPORTING METHOD AND APPARATUS**

(30) Priority: 20.02.2024 CN 202410191610; 04.03.2024 CN 202410248962
(71) Applicant: HUAWEI TECHNOLOGIES CO., LTD., Shenzhen, Guangdong 518129 (CN)
(72) Inventor: ZHAO, Mengkai, Shenzhen, Guangdong 518129 (CN); XU, Guoqi, Shenzhen, Guangdong 518129 (CN); ZHANG, Ka, Shenzhen, Guangdong 518129 (CN); DONG, Jie, Shenzhen, Guangdong 518129 (CN); GE, Jun, Shenzhen, Guangdong 518129 (CN); ZHANG, Tianle, Shenzhen, Guangdong 518129 (CN)
(74) Representative: Huawei European IPR
(86) International application number: PCT/CN2025/077854
(87) International publication number: WO 2025/176124

(57) **Abstract**

An embodiment of this application provides a method for reporting NRP information. A first network device may obtain a BGP-LS message, where the BGP-LS message includes first NLRI. The first NLRI includes link description information and NRP description information. The link description information indicates a first link. The NRP description information is used to describe a first NRP associated with the first link. After obtaining the BGP-LS message, the first network device may send the BGP-LS message to a controller. It can be learned that in this solution, BGP-LS NLRI is extended to obtain the first NLRI for carrying the link description information and the NRP description information, thereby implementing reporting of the NRP description information. In a scenario in which an NRP resource and topology information change, according to this solution, the controller can obtain a changed NRP resource and changed topology information in a timely manner.

## Description

This application claims priorities to the following patent applications, which are incorporated herein by reference in their entireties:
1: priority to Chinese Patent Application No. 202410191610.8, filed with the China National Intellectual Property Administration on February 20, 2024 and entitled "METHOD AND APPARATUS FOR REPORTING NETWORK SLICE INFORMATION"; and
2: priority to Chinese Patent Application No. 202410248962.2, filed with the China National Intellectual Property Administration on March 4, 2024 and entitled "METHOD AND APPARATUS FOR REPORTING NETWORK RESOURCE PARTITION INFORMATION".

### TECHNICAL FIELD

This application relates to the communication field, and in particular, to a method and an apparatus for reporting network resource partition information.

### BACKGROUND

With the development of network technologies, services supported by a network become increasingly diversified. For example, the services supported by the network may include a virtual reality (virtual reality, VR) service, an augmented reality (augmented reality, AR) service, a remote industrial control service, an autonomous driving service, an internet of things service, and the like.

Because requirements of different services for the network vary significantly, to meet the network requirements of different services, a network resource partition (network resource partition, NRP) technology may be applied to the network. An NRP includes a set of allocated resources and related policies on a group of interconnected links in an underlay network (underlay network). The resource mentioned herein may include one or more of a buffer, a queue, scheduling, and the like. In some scenarios, the NRP may also be referred to as a "network slice (network slice)".

For a network to which the NRP technology is applied, a controller may compute a service transmission path for a service based on pre-collected NRP resource and topology information, and indicate network devices on the service transmission path to reserve resources, so that the network devices can subsequently forward service traffic based on the reserved resources in a service forwarding phase.

Currently, when the NRP resource and topology information changes, the controller cannot perceive the change in a timely manner. Correspondingly, the controller cannot compute the service transmission path for the service in a timely manner based on changed NRP resource and topology information. Therefore, there is an urgent need for a solution to the foregoing problem.

### SUMMARY

Embodiments of this application provide a method and an apparatus for reporting NRP information, so that a network device can report NRP information to a controller, and the controller can obtain an NRP resource and topology information.

According to a first aspect, this application provides a method for reporting NRP information. A first network device may obtain a border gateway protocol link-state (Border Gateway Protocol Link-State, BGP-LS) message, where the BGP-LS message includes first network layer reachability information (network layer reachability information, NLRI). The first NLRI includes link description information and NRP description information. The link description information indicates a first link. The NRP description information is used to describe a first NRP associated with the first link. After obtaining the BGP-LS message, the first network device may send the BGP-LS message to a controller. It can be learned that in this solution, BGP-LS NLRI is extended to obtain the first NLRI for carrying the link description information and the NRP description information, thereby implementing reporting of the NRP description information. In a scenario in which an NRP resource and topology information change, according to this solution, the controller can obtain a changed NRP resource and changed topology information in a timely manner.

According to a second aspect, an embodiment of this application provides an NRP information receiving method. The method may be applied to a controller. The controller may receive a BGP-LS message sent by a first network device, where the BGP-LS message includes first NLRI. The first NLRI includes link description information and NRP description information. The link description information indicates a first link. The NRP description information is used to describe a first NRP associated with the first link. It can be learned that in this solution, BGP-LS NLRI is extended to obtain the first NLRI for carrying the link description information and the NRP description information, so that the first network device can report NRP information to the controller based on the first NLRI obtained through extension. In a scenario in which an NRP resource and topology information change, according to this solution, the controller can obtain a changed NRP resource and changed topology information in a timely manner. Correspondingly, the controller can compute a service transmission path for a service in a timely manner based on the changed NRP resource and the changed topology information, thereby ensuring quality of service provided for the service.

### For the first aspect and the second aspect

In a possible implementation, the first NLRI includes an NLRI type field, and the NLRI type field indicates a type of the first NLRI. In a specific example, the NLRI type field indicates that the first NLRI is link (link) NLRI. In other words, in this embodiment of this application, the link NLRI is extended, so that the link NLRI can be used to carry the link description information and the NRP description information, and the first network device can report the NRP information to the controller by using the link NLRI.

In a possible implementation, a new type of BGP-LS NLRI may be obtained through extension, namely, NRP link NLRI. In this scenario, an NLRI type field included in the first NLRI indicates that the first NLRI is NRP link NLRI. In other words, in this embodiment of this application, the new type of BGP-LS NLRI is obtained through extension, namely, NRP link NLRI. The NRP link NLRI can be used to carry the link description information and the NRP description information, so that the first network device can report the NRP information to the controller by using the NRP link NLRI.

In a possible implementation, the first NLRI is NLRI of an NRP granularity. In other words, when reporting the NRP information to the controller, the first network device may report the NRP information to the controller as required by using an NRP as a reporting granularity. For example, the first network device may report changed NRP information to the controller. In this way, on one hand, the controller can obtain the changed NRP resource and the changed topology information in a timely manner; and on the other hand, invalid information exchange between the first network device and the controller can be reduced.

In a possible implementation, considering that an NRP identifier (identifier, ID) can uniquely identify an NRP, the NRP description information may include an NRP ID identifying the first NRP. In an example, the first NLRI may include a first type length value (type length value, TLV). For example, an NRP description field includes the first TLV, and the first TLV is used to carry the NRP ID.

In a possible implementation, in addition to the NRP ID, the NRP description information may further include other additional description information of the first NRP. For example, the NRP description information may further include an NRP name and/or an NRP type. The NRP name mentioned herein may be a name of the first NRP. The NRP type mentioned herein indicates a use of the first NRP. The use of the first NRP may alternatively be an industry corresponding to the first NRP. In a specific example, the use of the first NRP may be one of education, healthcare, or manufacturing.

In a possible implementation, in addition to the first NLRI, the BGP-LS message may further include a BGP-LS attribute (attribute). The BGP-LS attribute is used to carry an attribute of the first NRP. In this manner, both the description information of the first NRP and the attribute of the first NRP may be carried in the BGP-LS message and reported to the controller, so that the controller can obtain the ID of the first NRP and the attribute of the first NRP from the BGP-LS message. The attribute of the first NRP may include at least one attribute of the first NRP. In an example, the attribute of the first NRP may include one or more of resource information of the first NRP, status information of the first NRP, and hierarchy information of the first NRP.

In a possible implementation, the resource information of the first NRP indicates a resource associated with the first NRP. In a specific example, the resource associated with the first NRP may include a logical interface associated with the first NRP and/or a resource allocated to the first NRP. Herein, the logical interface associated with the first NRP may also be referred to as an NRP interface (or an NRP interface resource) or a slice interface (or a slice interface resource). The resource allocated to the first NRP may be understood as a forwarding resource allocated to the first NRP. The resource allocated to the first NRP includes but is not limited to one or more of a bandwidth, a buffer, and a queue allocated to the first NRP.

In a possible implementation, the hierarchy information of the first NRP indicates a hierarchy or a level of the first NRP. In this embodiment of this application, the level of the first NRP may indicate a first-level NRP, or may indicate a second-level NRP.

In a possible implementation, the status information of the first NRP indicates a status of the first NRP. In a specific example, the status information of the first NRP may be a resource status of the first NRP, that is, the status information of the first NRP may indicate a status of a resource of the first NRP. In an example, the status of the resource of the first NRP may indicate whether the resource of the first NRP is available. For example, the status of the resource of the first NRP indicates that the resource of the first NRP is available, indicating that the network device successfully reserves the resource for the first NRP; or the status of the resource of the first NRP indicates that the resource of the first NRP is unavailable, indicating that the network device fails to reserve the resource for the first NRP. In still another example, the status of the resource of the first NRP may indicate a utilization status of the resource of the first NRP, and the utilization status may indicate, for example, a currently occupied resource in the first NRP.

In a possible implementation, the first network device may obtain the BGP-LS message when the NRP information of the first network device changes. In this way, when the NRP resource and the topology information change, the controller can obtain the changed NRP resource and the changed topology information in a timely manner.

In a specific example, that the NRP information of the first network device changes may include two cases. In one case, the first network device is configured with an NRP. In the other case, in the first network device, an NRP interface associated with an NRP fails, or a resource associated with an NRP is unavailable. In other words, in an example, the first network device obtains the BGP-LS message in response to a failure of the interface associated with the first NRP or unavailability of the resource associated with the first NRP. In another example, the first network device may obtain the BGP-LS message in response to being configured with the first NRP.

In a possible implementation, the first NRP may be configured on the first network device via the controller. Specifically, the controller may deliver configuration information of the first NRP to the first network device, to implement configuration of the first NRP on the first network device. In other words, the first network device may receive the configuration information of the first NRP delivered by the controller, locally configure the first NRP based on the configuration information of the first NRP, and further obtain the BGP-LS message. The configuration information of the first NRP includes at least the description information of the first NRP. The configuration information of the first NRP may further include other information related to the first NRP, for example, include one or more of the resource information of the first NRP, the status information of the first NRP, and the hierarchy information of the first NRP.

In a possible implementation, the configuration information of the first NRP is sent by the controller to the first network device after the controller computes the service transmission path for the service based on the NRP resource and the topology information, and the configuration information is used by the first network device to reserve the resource for the first NRP. In this case, the first NRP may be, for example, a second-level NRP. Correspondingly, in this scenario, the resource information of the first NRP included in the configuration information may be understood as a resource required by the first NRP. In this scenario, after receiving the configuration information of the first NRP sent by the controller, the first network device may reserve the resource for the first NRP based on the configuration information of the first NRP. In addition, the first network device may further determine the status information of the first NRP based on a result of reserving the resource for the first NRP. If the resource is successfully reserved for the first NRP, the status information of the first NRP indicates that the resource of the first NRP is available; or if the resource fails to be reserved for the first NRP, the status information of the first NRP indicates that the resource of the first NRP is unavailable. Correspondingly, when the BGP-LS message is obtained, the BGP-LS message including the determined status information of the first NRP may be obtained based on the determined status information of the first NRP.

In a possible implementation, in addition to indicating the first NRP associated with the first link, the NRP description information in the first NLRI may further indicate a second NRP associated with the first link. In a specific example, if both the second NRP and the first NRP that are associated with the first link change, the NRP description information in the first NLRI further indicates the second NRP associated with the first link. In this manner, changed information about a plurality of NRPs on the first network device may be reported to the controller by using one BGP-LS message, so that a quantity of messages exchanged between the first network device and the controller can be reduced.

According to a third aspect, this application provides a method for reporting NRP information. A first network device may obtain a BGP-LS message, where the BGP-LS message includes first NLRI. The first NLRI includes node description information and NRP description information. The node description information indicates the first network device. The NRP description information is used to describe a first NRP associated with the first network device. After obtaining the BGP-LS message, the first network device may send the BGP-LS message to a controller. It can be learned that in this solution, BGP-LS NLRI is extended to obtain the first NLRI for carrying the node description information and the NRP description information, thereby implementing reporting of the NRP description information. In a scenario in which an NRP resource and topology information change, according to this solution, the controller can obtain a changed NRP resource and changed topology information in a timely manner.

According to a fourth aspect, an embodiment of this application provides an NRP information receiving method. The method may be applied to a controller. The controller may receive a BGP-LS message sent by a first network device, where the BGP-LS message includes first NLRI. The first NLRI includes node description information and NRP description information. The node description information indicates the first network device. The NRP description information is used to describe a first NRP associated with the first network device. It can be learned that in this solution, BGP-LS NLRI is extended to obtain the first NLRI for carrying the node description information and the NRP description information, so that the first network device can report NRP information to the controller based on the first NLRI obtained through extension. In a scenario in which an NRP resource and topology information change, according to this solution, the controller can obtain a changed NRP resource and changed topology information in a timely manner. Correspondingly, the controller can compute a service transmission path for a service in a timely manner based on the changed NRP resource and the changed topology information, thereby ensuring quality of service provided for the service.

### For the third aspect and the fourth aspect

In a possible implementation, the first NLRI includes an NLRI type field, and the NLRI type field indicates a type of the first NLRI. In a specific example, the NLRI type field indicates that the first NLRI is node (node) NLRI. In other words, in this embodiment of this application, the node NLRI is extended, so that the node NLRI can be used to carry the link description information and the NRP description information, and the first network device can report the NRP information to the controller by using the node NLRI.

In a possible implementation, a new type of BGP-LS NLRI may be obtained through extension, namely, NRP node NLRI. In this scenario, an NLRI type field included in the first NLRI indicates that the first NLRI is NRP node NLRI. In other words, in this embodiment of this application, the new type of BGP-LS NLRI is obtained through extension, namely, NRP node NLRI. The NRP node NLRI can be used to carry the link description information and the NRP description information, so that the first network device can report the NRP information to the controller by using the NRP node NLRI.

In a possible implementation, the first NLRI is NLRI of an NRP granularity. In other words, when reporting the NRP information to the controller, the first network device may report the NRP information to the controller as required by using an NRP as a reporting granularity. For example, the first network device may report changed NRP information to the controller. In this way, on one hand, the controller can obtain the changed NRP resource and the changed topology information in a timely manner; and on the other hand, invalid information exchange between the first network device and the controller can be reduced.

In a possible implementation, the NRP description information includes an NRP identifier ID, and the NRP ID identifies the first NRP.

In a possible implementation, the NRP description information further includes an NRP name and/or an NRP type, where the NRP name is a name of the first NRP, the NRP type indicates a use of the first NRP, and the use of the first NRP includes education, healthcare, or manufacturing.

In a possible implementation, the BGP-LS message further includes a BGP-LS attribute, the BGP-LS attribute information is used to carry an attribute of the first NRP, and the attribute of the first NRP includes at least one of the following: resource information of the first NRP, status information of the first NRP, and hierarchy information of the first NRP.

In a possible implementation, the resource information includes a resource allocated to a logical interface associated with the first NRP and/or the first NRP.

In a possible implementation, the status information of the first NRP includes a status of a resource of the first NRP, where the status of the resource indicates whether the resource is available and/or a utilization status of the resource.

In a possible implementation, the hierarchy information of the first NRP indicates that the first NRP is a first-level NRP or a second-level NRP.

In a possible implementation, that the first network device obtains the border gateway protocol link-state BGP-LS message includes: The first network device obtains the BGP-LS message in response to being configured with the first NRP.

In a possible implementation, that the first network device is configured with the first NRP includes: The first network device receives configuration information of the first NRP delivered by the controller, where the configuration information includes at least the NRP description information.

In a possible implementation, the method further includes: The first network device reserves the resource for the first NRP based on the configuration information of the first NRP, and determines the status information of the first NRP based on a result of reserving the resource for the first NRP. If the resource is successfully reserved for the first NRP, the status information of the first NRP indicates that the resource of the first NRP is available; or if the resource fails to be reserved for the first NRP, the status information of the first NRP indicates that the resource of the first NRP is unavailable. Correspondingly, that the first network device obtains the border gateway protocol link-state BGP-LS message includes: The first network device obtains the BGP-LS message including the status information of the first NRP.

In a possible implementation, that the first network device obtains the border gateway protocol link-state BGP-LS message includes: The first network device obtains the BGP-LS message in response to a failure of the interface associated with the first NRP or unavailability of a resource associated with the first NRP.

In a possible implementation, the NRP description information further indicates a second NRP associated with the first link.

According to a fifth aspect, an embodiment of this application provides an apparatus for reporting network resource partition information, used in a first network device. The apparatus includes: a processing unit, configured to obtain a border gateway protocol link-state BGP-LS message, where the BGP-LS message includes first network layer reachability information NLRI, the first NLRI includes link description information and network resource partition NRP description information, the link description information indicates a first link, and the NRP description information indicates a first NRP associated with the first link; and a sending unit, configured to send the BGP-LS message to a controller.

In a possible implementation, an NLRI type field included in the first NLRI indicates that the first NLRI is link NLRI.

In a possible implementation, an NLRI type field included in the first NLRI indicates that the first NLRI is NRP link NLRI.

In a possible implementation, the NRP description information includes an NRP identifier ID, and the NRP ID identifies the first NRP.

In a possible implementation, the NRP description information further includes an NRP name and/or an NRP type, where the NRP name is a name of the first NRP, the NRP type indicates a use of the first NRP, and the use of the first NRP includes education, healthcare, or manufacturing.

In a possible implementation, the BGP-LS message further includes a BGP-LS attribute, the BGP-LS attribute information is used to carry an attribute of the first NRP, and the attribute of the first NRP includes at least one of the following: resource information of the first NRP, status information of the first NRP, and hierarchy information of the first NRP.

In a possible implementation, the resource information includes a resource allocated to a logical interface associated with the first NRP and/or the first NRP.

In a possible implementation, the status information of the first NRP includes a status of a resource of the first NRP, where the status of the resource indicates whether the resource is available and/or a utilization status of the resource.

In a possible implementation, the hierarchy information of the first NRP indicates that the first NRP is a first-level NRP or a second-level NRP.

In a possible implementation, the processing unit is configured to obtain the BGP-LS message in response to being configured with the first NRP.

In a possible implementation, being configured with the first NRP includes: receiving configuration information of the first NRP delivered by the controller, where the configuration information includes at least the NRP description information.

In a possible implementation, the processing unit is configured to: reserve the resource for the first NRP based on the configuration information of the first NRP, and determine the status information of the first NRP based on a result of reserving the resource for the first NRP, where if the resource is successfully reserved for the first NRP, the status information of the first NRP indicates that the resource of the first NRP is available, or if the resource fails to be reserved for the first status information, the status information of the first NRP indicates that the resource of the first NRP is unavailable; and obtain the BGP-LS message including the status information of the first NRP.

In a possible implementation, the processing unit is configured to obtain the BGP-LS message in response to a failure of the interface associated with the first NRP or unavailability of a resource associated with the first NRP.

In a possible implementation, the NRP description information further indicates a second NRP associated with the first link.

According to a sixth aspect, an embodiment of this application provides an apparatus for reporting network resource partition information, used in a first network device. The apparatus includes: a processing unit, configured to obtain a border gateway protocol link-state BGP-LS message, where the BGP-LS message includes first network layer reachability information NLRI, the first NLRI includes node description information and network resource partition NRP description information, the node description information indicates the first network device, and the NRP description information indicates a first NRP associated with the first network device; and a sending unit, configured to send the BGP-LS message to a controller.

In a possible implementation, an NLRI type field included in the first NLRI indicates that the first NLRI is node NLRI.

In a possible implementation, an NLRI type field included in the first NLRI indicates that the first NLRI is NRP node NLRI.

In a possible implementation, the NRP description information includes an NRP identifier ID, and the NRP ID identifies the first NRP.

In a possible implementation, the NRP description information further includes an NRP name and/or an NRP type, where the NRP name is a name of the first NRP, the NRP type indicates a use of the first NRP, and the use of the first NRP includes education, healthcare, or manufacturing.

In a possible implementation, the BGP-LS message further includes a BGP-LS attribute, the BGP-LS attribute information is used to carry an attribute of the first NRP, and the attribute of the first NRP includes at least one of the following: resource information of the first NRP, status information of the first NRP, and hierarchy information of the first NRP.

In a possible implementation, the resource information includes a resource allocated to a logical interface associated with the first NRP and/or the first NRP.

In a possible implementation, the status information of the first NRP includes a status of a resource of the first NRP, where the status of the resource indicates whether the resource is available and/or a utilization status of the resource.

In a possible implementation, the hierarchy information of the first NRP indicates that the first NRP is a first-level NRP or a second-level NRP.

In a possible implementation, the processing unit is configured to obtain the BGP-LS message in response to being configured with the first NRP.

In a possible implementation, being configured with the first NRP includes: receiving configuration information of the first NRP delivered by the controller, where the configuration information includes at least the NRP description information.

In a possible implementation, the processing unit is configured to: reserve the resource for the first NRP based on the configuration information of the first NRP, and determine the status information of the first NRP based on a result of reserving the resource for the first NRP, where if the resource is successfully reserved for the first NRP, the status information of the first NRP indicates that the resource of the first NRP is available, or if the resource fails to be reserved for the first NRP, the status information of the first NRP indicates that the resource of the first NRP is unavailable; and obtain the BGP-LS message including the status information of the first NRP.

In a possible implementation, the processing unit is configured to obtain the BGP-LS message in response to a failure of the interface associated with the first NRP or unavailability of a resource associated with the first NRP.

In a possible implementation, the NRP description information further indicates a second NRP associated with the first link.

According to a seventh aspect, an embodiment of this application provides a device, including a processor and a memory. The memory is configured to store instructions or a computer program. The processor is configured to execute the instructions or the computer program to perform the method according to any one of the first aspect and the possible implementations of the first aspect, or perform the method according to any one of the second aspect and the possible implementations of the second aspect.

According to an eighth aspect, an embodiment of this application provides a computer-readable storage medium, including instructions or a computer program. When the instructions or the computer program is run on a computer, the computer is enabled to perform the method according to any one of the first aspect and the implementations of the first aspect, or the computer is enabled to perform the method according to any one of the second aspect or the implementations of the second aspect.

According to a ninth aspect, an embodiment of this application provides a computer program product including instructions or a computer program. When the computer program product runs on a computer, the computer is enabled to perform the method according to any one of the first aspect and the implementations of the first aspect, or the computer is enabled to perform the method according to any one of the second aspect and the implementations of the second aspect.

According to a tenth aspect, an embodiment of this application provides a communication system. The communication system includes:
a first network device that performs the method according to any one of the first aspect and the implementations of the first aspect, and a controller that performs the method according to any one of the second aspect and the implementations of the second aspect; or
a first network device that performs the method according to any one of the third aspect and the implementations of the third aspect, and a controller that performs the method according to any one of the fourth aspect and the implementations of the fourth aspect.

### BRIEF DESCRIPTION OF DRAWINGS

To describe the technical solutions in embodiments of this application or the prior art more clearly, the following briefly describes the accompanying drawings for describing embodiments or the prior art It is clear that the accompanying drawings in the following descriptions show only some embodiments recorded in this application, and a person of ordinary skill in the art may still derive other drawings from these accompanying drawings without creative efforts.
FIG. 1 is a diagram of an example application scenario according to an embodiment of this application;
FIG. 2a is a diagram of a structure of a BGP message header according to an embodiment of this application;
FIG. 2b is a diagram of a structure of MP_REACH_NLRI according to an embodiment of this application;
FIG. 2c is a diagram of a structure of link-state NLRI according to an embodiment of this application;
FIG. 3 is a schematic flowchart of a method for reporting NRP information according to an embodiment of this application;
FIG. 4a is a diagram of an example application scenario according to an embodiment of this application;
FIG. 4b(1) and FIG. 4b(2) are a diagram of an NRP information reporting process according to an embodiment of this application;
FIG. 4c is a diagram of a structure of first NLRI according to an embodiment of this application;
FIG. 5a is a diagram of an example application scenario according to an embodiment of this application;
FIG. 5b(1) and FIG. 5b(2) are a diagram of an NRP information reporting process according to an embodiment of this application;
FIG. 6 is a schematic flowchart of a method for reporting NRP information according to an embodiment of this application;
FIG. 7a(1) and FIG. 7a(2) are a diagram of still another NRP information reporting process according to an embodiment of this application;
FIG. 7b is a diagram of a structure of still another piece of first NLRI according to an embodiment of this application;
FIG. 7c(1) and FIG. 7c(2) are a diagram of an NRP information reporting process according to an embodiment of this application;
FIG. 8 is a diagram of a structure of an apparatus for reporting NRP information according to an embodiment of this application; and
FIG. 9 is a diagram of a structure of a device according to an embodiment of this application.

### DESCRIPTION OF EMBODIMENTS

Embodiments of this application provide a method and an apparatus for reporting NRP information, to report NRP information.

For ease of understanding, related content of an NRP is first described.

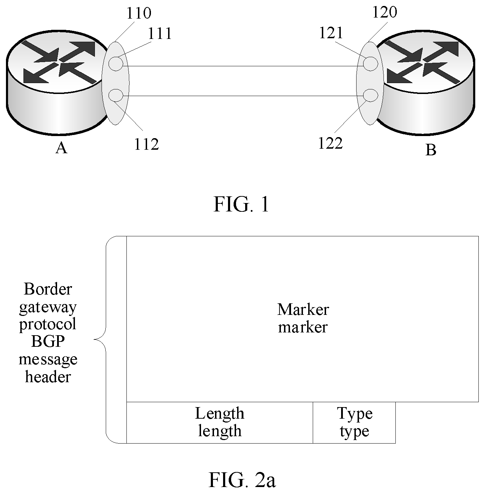

Currently, a bearer network may be divided into a plurality of NRPs with isolated resources by partitioning interface forwarding resources of network devices. Refer to FIG. 1 for understanding. FIG. 1 is a diagram of an example application scenario according to an embodiment of this application.

As shown in FIG. 1, a network device A includes a protocol interface 110, and a network device B includes a protocol interface 120. For the network device A, the protocol interface 110 may be partitioned into two corresponding logical interfaces 111 and 112, and resources are respectively allocated to the logical interface 111 and the logical interface 112. Similarly, for the network device B, the protocol interface 120 may be partitioned into two logical interfaces 121 and 122, and resources are respectively allocated to the logical interface 121 and the logical interface 122. Both the logical interface 111 and the logical interface 121 are associated with an NRP 1, and both the logical interface 112 and the logical interface 122 are associated with an NRP 2. In other words, a logical link between the logical interface 111 and the logical interface 121 is associated with the NRP 1, and a logical link between the logical interface 112 and the logical interface 122 is associated with the NRP 2. Each protocol interface of any group of devices to which an NRP technology is applied in a network may be partitioned in this manner, to obtain a plurality of NRPs with mutually isolated resources. A first link between the protocol interface 110 and the protocol interface 120 may include the logical link between the logical interface 111 and the logical interface 121 and the logical link between the logical interface 112 and the logical interface 122.

The protocol interface in embodiments of this application may run a layer 3 control protocol and exchange a control message of the protocol. Of course, in addition to transmitting control information, the protocol interface may also be configured to transmit traffic in a traffic forwarding phase. The control protocol herein includes but is not limited to BGP and/or an interior gateway protocol (Interior Gateway Protocol, IGP). In a specific example, the protocol interface may be a layer 3 (layer 3) interface.

In addition, to facilitate planning and management of an NRP, a level of the NRP may be set, where the level is used to distinguish between a hierarchy and a nesting relationship of resource partitioning. The level of the NRP may include a first-level NRP, a second-level NRP, a third-level NRP, and the like. For example, a first-level NRP is first set on a layer 3 interface, and resources such as a bandwidth are allocated. Then, a second-level NRP may be further obtained through partitioning in the first-level NRP, and there is a nesting relationship between the resources of the first-level NRP and the second-level NRP. By analogy, a third-level NRP may be further obtained through partitioning in the second-level NRP.

The first-level NRP may be an NRP for a private network or an NRP for a private line. The second-level NRP may also be an NRP for a private network or an NRP for a private line. The NRP for a private network is used to provide large-granularity NRPs for specific uses, and is usually in a form of a multipoint-to-multipoint mesh connection. The NRP for a private line is used to provide fine-granularity NRPs for different users (for example, enterprise users), and is usually in a form of a point-to-point linear connection. There may be a nesting relationship between the NRP for a private network and NRP for a private line. In this case, the NRP for private network is referred to as a main NRP, and the NRP for a private line is referred to as a sub-NRP. Alternatively, there may be a parallel relationship between the NRP for a private network and NRP for a private line. Each NRP is identified by an NRP ID.

For example, a protocol interface is partitioned into two main NRPs corresponding to different uses, and IDs of the two main NRPs are 200 and 300 respectively. Then, in the main NRP 200, a sub-NRP 210 is created for a user A, and a sub-NRP 220 is created for a user B; and in the main NRP 300, a sub-NRP 310 is created for a user C.

When an NRP service is deployed, IGP or BGP is usually used to establish routing connectivity. When service traffic is forwarded, an ingress node of a forwarding path first finds a next hop and an outbound interface by using a routing table, where the outbound interface is the foregoing protocol interface; and then finds, based on an NRP ID set in a matched traffic diversion policy (for example, an SR policy), a resource corresponding to the NRP ID under the outbound interface for forwarding. The traffic diversion policy herein may be, for example, a segment routing policy (segment routing policy, SR policy).

For a network to which an NRP technology is applied, a controller may compute a service transmission path for a service based on a pre-collected NRP resource and topology information, and indicate a network device on the service transmission path to reserve a resource, so that the network device can subsequently forward service traffic based on the reserved resource in a service forwarding phase.

In an actual application, the NRP resource and the topology information may change. For example, an interface associated with an NRP on the network device fails. For another example, an NRP configuration is added or modified on the network device. Currently, when the NRP resource and the topology information change, the controller cannot sense the change in a timely manner. Correspondingly, the controller cannot compute the service transmission path for the service in a timely manner based on a changed NRP resource and changed topology information. This further leads to problems such as service transmission interruption, service quality deterioration, and an incapability in properly using network resources.

To resolve the foregoing problems, in some embodiments, the network device may report the NRP resource and the topology information to the controller by using BGP-LS, to trigger the controller for path recomputing. Specifically, reference may be made to request for comments (request for comments, RFC) 9085, and a new TLV or sub-TLV may be defined in a route attribute corresponding to BGP-LS link NLRI to carry NRP information for reporting.

However, in this manner, the NRP information needs to be reported with link-state information of a protocol interface associated with the NRP, and the link-state information of the protocol interface needs to include information about all NRPs associated with the protocol interface.

On one hand, because one protocol interface may be associated with a plurality of NRPs, as long as status information of an interface associated with one of the NRPs changes, link-state information corresponding to the protocol interface needs to be reported to the controller. As described above, the link-state information needs to include information about all of the NRPs associated with the protocol interface. As a result, the network device reports a large amount of data to the controller. In addition, the data reported by the network device to the controller includes most invalid update data. The invalid update data mentioned herein may be NRP information corresponding to an interface whose status information does not change in the protocol interface. The interface associated with the NRP mentioned herein is a logical interface obtained by partitioning the protocol interface, and may also be referred to as an NRP interface (or an NRP interface resource) or a slice interface (or a slice interface resource) in some scenarios. In other words, in this manner, there is a large amount of unnecessary data exchange between the network device and the controller.

On the other hand, as defined in RFC 4271, a single BGP message cannot exceed 4096 bytes. Due to a limitation of a BGP-LS packet size, a maximum quantity of pieces of NRP information carried in a BGP update message with link NLRI is limited. In other words, when the foregoing protocol interface is associated with a large quantity of NRPs, in the foregoing manner, not all information about the NRPs associated with the protocol interface can be reported to the controller, so that the controller cannot obtain a complete NRP resource and complete topology information.

In view of this, embodiments of this application provide a method and an apparatus for reporting NRP information, so that the network device can report the NRP information to the controller, and the controller can obtain the complete NRP resource and the complete topology information. In addition, existence of a large amount of unnecessary data exchange between the network device and the controller can be avoided.

Before the method for reporting NRP information provided in embodiments of this application is described, technologies related to this solution are first described.

### 1. BGP

BGP is a dynamic routing protocol used between autonomous systems (autonomous systems, ASs). As an external routing protocol standard of the internet, BGP is widely used between internet service providers (internet service providers, ISPs). Currently, multi-protocol extensions for BGP (Multi-Protocol Extensions for BGP, MP-BGP) obtained by extending BGP-4 (BGP-4) are widely used.

A BGP message includes a BGP message header and message content. The BGP message header may be shown in FIG. 2a. FIG. 2a is a diagram of a structure of the BGP message header according to an embodiment of this application. As shown in FIG. 2a, the BGP message header includes three parts: a marker (marker) field, a length field, and a type (type) field. The three parts of the BGP message header may be understood with reference to Table 1.

**Table 1**

| Field name | Length | Meaning |
|---|---|---|
| marker | 16 bytes | Used to check whether synchronization information of a BGP peer is complete and used for BGP authentication computation. When authentication is not used, all bits are 1 (all bits are "FF" in hexadecimal format). |
| length | 2 bytes | A total length of the BGP message (including the message header) in bytes. The length ranges from 19 bytes to 65535 bytes. |
| type | 1 byte | BGP message type. Type has five optional values, indicating five types of messages following the BGP message header. Values of type may be understood with reference to Table 2. |

As shown in Table 2, BGP has five message types shown in Table 2, and the five message types have a same BGP message header. These messages are transmitted based on a transmission control protocol (Transmission Control Protocol, TCP). A maximum length of the message is 65535 bytes, and a minimum length (including only the BGP message header) is 19 bytes.

**Table 2**

| Value of type | Message type |
|---|---|
| 1 | open |
| 2 | update |
| 3 | notification |
| 4 | keepalive |
| 5 | route refresh |

BGP open messages, BGP notification messages, BGP keepalive messages, and BGP route refresh messages are not described in detail here.

The BGP update message is used to advertise a route.

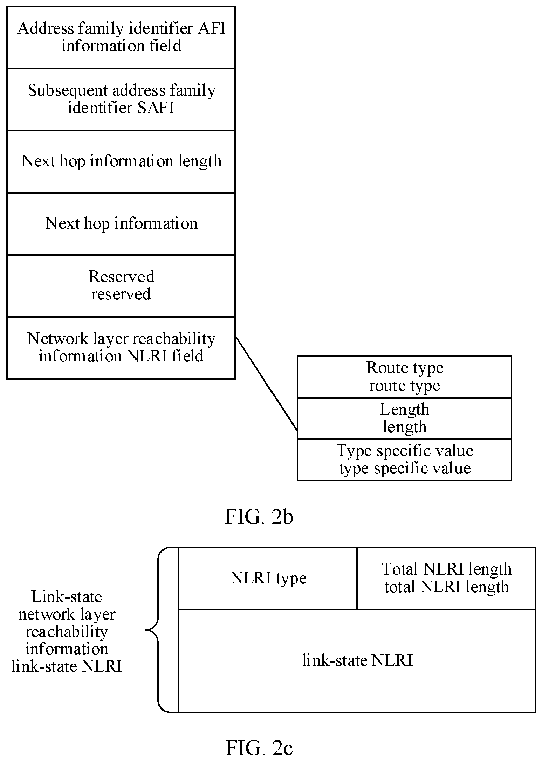

In an example, a route may be advertised between communication apparatuses by using MP-BGP. Specifically, a BGP message that is exchanged between the communication apparatuses and that is used to advertise the route includes multi-protocol reachable network layer reachability information (Multi-Protocol reachable network layer reachability information, MP_REACH_NLRI), and MP_REACH_NLRI is used to carry the route. In an example, a structure of MP_REACH_NLRI is shown in FIG. 2b. FIG. 2b is a diagram of a structure of MP_REACH_NLRI according to an embodiment of this application. As shown in FIG. 2b, MP_REACH_NLRI includes an address family identifier (address family identifier, AFI), a subsequent address family identifier (subsequent address family identifier, SAFI), a next hop information length field, a next hop information field, and an NLRI field.

In an example, the AFI field may identify a network layer protocol. For example, when a value of the AFI field is 1, an IPv4 is identified; and when the value of the AFI field is 2, an IPv6 is identified. For the value of the AFI field, refer to related descriptions of an address family number (Address Family Number) in RFC 1700. Details are not described herein. The SAFI field identifies a type of a subsequent address family. For example, when a value of the SAFI field is 1, unicast is identified; when the value of the SAFI field is 2, multicast is identified; when the value of the SAFI field is 74, an SD-WAN is identified; and when the value of the SAFI field is 128, a virtual private network (virtual private network, VPN) is identified.

In an example, a next-hop network address may be a network address of a next device on a path to a destination device.

In an example, the NLRI field may include one or more pieces of NLRI, each piece of NLRI includes a length field and an NLRI value field, and specific content of the NLRI value may be determined based on a combination of the AFI field and the SAFI field.

The NLRI field includes a route type field, a length field, and a type specific value (type specific value) field. The route type field indicates a route type, the length field indicates a length of the type specific value field, and the type specific value field is used to carry a related value of a type corresponding to the route type field.

### 2. BGP-LS

BGP-LS is a network topology collection manner, and makes topology collection simpler and more efficient.

BGP-LS introduces a series of new pieces of NLRI to carry information about a link, a node, and an IPv4 prefix or an IPv6 prefix based on original BGP. The new NLRI is referred to as link-state (link-state) NLRI. In an example, BGP-LS uses an MP_REACH_NLRI attribute as a container of the link-state NLRI. In other words, the link-state NLRI may be carried in a BGP update message as the MP_REACH_NLRI attribute. In still another example, BGP-LS uses an MP_UNREACH_NLRI attribute as a container of the link-state NLRI. In other words, the link-state NLRI may be carried in a BGP update message as the MP_UNREACH_NLRI attribute.

FIG. 2c is a diagram of a structure of the link-state NLRI according to an embodiment of this application. As shown in FIG. 2c, the link-state NLRI includes an NLRI type field, a total NLRI length (total NLRI length) field, and a link-state NLRI field.

The NLRI type field indicates an NLRI type. For a current value of the NLRI type field, refer to Table 3 for understanding.

The total NLRI length field indicates a length of the entire NLRI.

The link-state NLRI field is used to carry specific content, and content of the link-state NLRI field is determined based on the value of the NLRI type field.

**Table 3**

| Value of NLRI type | Link-state NLRI type |
|---|---|
| 1 | Node (node) NLRI |
| 2 | Link (link) NLRI |
| 3 | IPv4 topology prefix (Topology Prefix) NLRI |
| 4 | IPv6 topology prefix (Topology Prefix) NLRI |

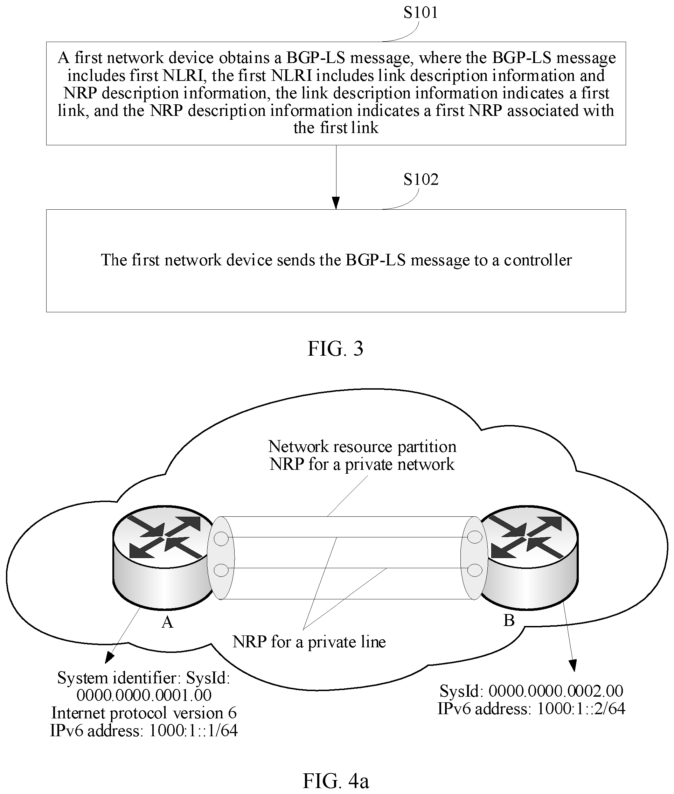

The following describes, with reference to FIG. 3, the method for reporting NRP information provided in embodiments of this application.

FIG. 3 is a schematic flowchart of a method for reporting NRP information according to an embodiment of this application.

The method for reporting NRP information shown in FIG. 3 may be applied to a first network device. The first network device may be a device to which an NRP technology is applied. For example, the first network device includes but is not limited to a router or a switch.

The method shown in FIG. 3 may include the following S101 and S102.

S101: The first network device obtains a BGP-LS message, where the BGP-LS message includes first NLRI, the first NLRI includes link description information and NRP description information, the link description information indicates a first link, and the NRP description information indicates a first NRP associated with the first link.

The first NLRI is BGP-LS NLRI. The first NLRI includes an NLRI type field, and the NLRI type field indicates a type of the first NLRI.

In an example, the NLRI type field included in the first NLRI indicates that the first NLRI is link NLRI. For example, as shown in Table 3, a value of the NLRI type field included in the first NLRI may be 2, indicating that the first NLRI is link NLRI.

In still another example, a new type of BGP-LS NLRI may be obtained through extension, namely, NRP link NLRI. A value of the NLRI type field corresponding to the new type of BGP-LS NLRI obtained through extension may be, for example, 5. In this case, the NLRI type field included in the first NLRI indicates that the first NLRI is NRP link NLRI.

In this embodiment of this application, the first NLRI may be NLRI of an NRP granularity, that is, the first NLRI may be used to report NRP information by using an NRP as a granularity.

In an example, the first NLRI includes a link description field and an NRP description field. The link description field is used to carry the link description information. The link description information may include information about two endpoints connected by the first link, for example, include IP addresses of the two endpoints connected by the first link. The NRP description field is used to carry the NRP description information.

In this embodiment of this application, the NRP description information is used to describe the first NRP, and the NRP description information includes at least information that can uniquely identify the first NRP. In a specific example, considering that an NRP ID can uniquely identify an NRP, the NRP description information may include an NRP ID identifying the first NRP. In an example, the first NLRI may include a first TLV. For example, the foregoing NRP description field includes the first TLV, and the first TLV is used to carry the NRP ID. In a scenario in which an NRP is referred to as a network slice, the NRP ID may be a network slice ID.

In this embodiment of this application, the first NRP is an NRP between the first network device and a second network device. The second network device and the first network device may belong to a same network domain, or may belong to different network domains. This is not specifically limited in embodiments of this application.

In an example, in addition to the NRP ID, the NRP description information may further include other additional description information of the first NRP. For example, the NRP description information may further include an NRP name and/or an NRP type. The NRP name mentioned herein may be a name of the first NRP. The NRP type mentioned herein indicates a use of the first NRP. A use of an NRP mentioned herein may alternatively be an industry corresponding to the NRP. In a specific example, the use of the first NRP may be one of education, healthcare, or manufacturing.

In an example, the first NLRI may include a second TLV and/or a third TLV. For example, in addition to the first TLV, the NRP description field further includes the second TLV and/or the third TLV, where the second TLV is used to carry the NRP name, and the third TLV is used to carry the NRP type.

In an example, the first NLRI further includes local node description information and remote node description information, and the first link is a link between a local node and a remote node. Specifically, the first NLRI further includes a local node description field and a remote node description field, where the local node description field is used to carry the local node description information, and the remote node description field is used to carry the remote node description information. The local node description information may be an intermediate system to intermediate system (intermediate system to intermediate system, IS-IS) system identifier (system identifier, sys-ID) corresponding to the local node or a BGP router identifier (router identifier, router ID) corresponding to the local node. Similarly, the remote node description information may be an IS-IS sys-ID corresponding to the remote node or a BGP router ID corresponding to the remote node. In an example, the local node mentioned herein may be the first network device, and the remote node mentioned herein may be the second network device.

In this embodiment of this application, in addition to the first NLRI, the BGP-LS message may further include a BGP-LS attribute. The BGP-LS attribute is used to carry an attribute of the first NRP. In this manner, both the description information of the first NRP and the attribute of the first NRP may be carried in the BGP-LS message.

In this embodiment of this application, the attribute of the first NRP may include at least one attribute of the first NRP. In an example, the attribute of the first NRP may include one or more of resource information of the first NRP, status information of the first NRP, and hierarchy information of the first NRP.

The resource information of the first NRP indicates a resource associated with the first NRP. In a specific example, the resource associated with the first NRP may include a logical interface associated with the first NRP and/or a resource allocated to the first NRP. Herein, the logical interface associated with the first NRP may also be referred to as an NRP interface (or an NRP interface resource) or a slice interface (or a slice interface resource). The resource allocated to the first NRP may be understood as a forwarding resource allocated to the first NRP. The resource allocated to the first NRP includes but is not limited to one or more of a bandwidth, a buffer, and a queue allocated to the first NRP.

The hierarchy information (hierarchy information) of the first NRP indicates a hierarchy or a level (level) of the first NRP. In this embodiment of this application, the level of the first NRP may indicate a first-level NRP, or may indicate a second-level NRP. This is not specifically limited in embodiments of this application.

For example, hierarchy information of an NRP is represented in a numerical manner. The hierarchy information of the first NRP is 1, indicating that the level of the first NRP indicates a first-level NRP; or the hierarchy information of the first NRP is 2, indicating that the level of the first NRP indicates a second-level NRP. For another example, hierarchy information of an NRP is represented by using a flag bit. The hierarchy information of the first NRP is 010, indicating that the level of the first NRP indicates a second-level NRP.

When the attribute of the first NRP includes the hierarchy information of the first NRP, the attribute of the first NRP further includes a parent NRP identifier (Parent NRP ID), where the parent NRP identifier indicates an upper-level NRP of the NRP. For example, an identifier of a first-level NRP is 100, an identifier of a second-level NRP is 200, and the first-level NRP is a parent NRP of the second-level NRP. Therefore, the hierarchy information of the NRP is 2, indicating the second-level NRP; and correspondingly, a value of the parent NRP identifier is 100, indicating a parent NRP of the second-level NRP, that is, the first-level NRP.

The parent NRP identifier may be included in the hierarchy information of the first NRP. For example, the hierarchy information of the first NRP is represented as (2, 100), where "2" represents the second-level NRP, and "100" represents the parent NRP of the second-level NRP, that is, the first-level NRP.

The status information of the first NRP indicates a status of the first NRP. In a specific example, the status information of the first NRP may be a resource status of the first NRP, that is, the status information of the first NRP may indicate a status of a resource of the first NRP.

In an example, the status of the resource of the first NRP may indicate whether the resource of the first NRP is available. For example, the status of the resource of the first NRP indicates that the resource of the first NRP is available, indicating that the network device successfully reserves the resource for the first NRP; or the status of the resource of the first NRP indicates that the resource of the first NRP is unavailable, indicating that the network device fails to reserve the resource for the first NRP.

In still another example, the status of the resource of the first NRP may indicate a utilization status of the resource of the first NRP. For example, the utilization status may indicate a currently occupied resource in the first NRP. For example, when the first NRP is a first-level NRP, the status of the resource of the first NRP may indicate the currently occupied resource in the first NRP (for example, a resource allocated to a second-level NRP).

In an implementation, the BGP-LS attribute may include a plurality of TLVs, and each TLV is used to carry one attribute of the first NRP. For example, the BGP-LS may include at least one of a fourth TLV, a fifth TLV, and a sixth TLV, where the fourth TLV is used to carry the resource information of the first NRP, the fifth TLV is used to carry the status information of the first NRP, and the sixth TLV is used to carry the hierarchy information of the first NRP.

In addition, the BGP-LS attribute may further carry a segment identifier (segment identifier, SID) of the first NRP. For example, the BGP-LS attribute includes an SID TLV, used to carry the SID of the first NRP. The SID TLV is not specifically limited in embodiments of this application. In an example, the SID TLV may be an adjacency segment identifier (Adj-SID) TLV defined in RFC 9085. In still another example, the SID TLV may be an endpoint with L3 cross-connect (Endpoint with L3 cross-connect, End.X) SID TLV defined in RFC 9514. Details are not described herein.

In this embodiment of this application, the first network device may obtain the BGP-LS message when the NRP information of the first network device changes. The obtaining the BGP-LS message mentioned herein may be, for example, generating the BGP-LS message. That the NRP information of the first network device changes may include two cases. In one case, the first network device is configured with an NRP. In the other case, in the first network device, an NRP interface associated with an NRP fails, or a resource associated with an NRP is unavailable.

In a specific example, the first network device may obtain the BGP-LS message in response to being configured with the first NRP. In this case, the first NLRI may be carried in MP-REACH-NLRI in the BGP-LS message.

A specific implementation in which the first NRP is configured on the first network device is not specifically limited in embodiments of this application. For example, the first NRP may be configured on the first network device via a network management system or a controller. For another example, the first NRP may be configured on the first network device by using a command line. In a scenario in which the first NRP is configured on the first network device via the controller, the controller may deliver configuration information of the first NRP to the first network device, to implement configuration of the first NRP on the first network device. In other words, the first network device may receive the configuration information of the first NRP delivered by the controller, locally configure the first NRP based on the configuration information of the first NRP, and further obtain the BGP-LS message.

In this embodiment of this application, the configuration information of the first NRP includes at least the description information of the first NRP. Certainly, the configuration information of the first NRP may further include other information related to the first NRP, for example, include one or more of the resource information of the first NRP, the status information of the first NRP, and the hierarchy information of the first NRP.

In a specific example, the configuration information of the first NRP may be sent by the controller to the first network device after a user completes NRP setting (for example, initialization setting) on a controller side.

In still another specific example, the configuration information of the first NRP is sent by the controller to the first network device after the controller computes a service transmission path for a service based on an NRP resource and topology information, and the configuration information is used by the first network device to reserve the resource for the first NRP. In this case, the first NRP may be, for example, a second-level NRP. Correspondingly, in this scenario, the resource information of the first NRP included in the configuration information may be understood as a resource required by the first NRP.

In this scenario, after receiving the configuration information of the first NRP sent by the controller, the first network device may reserve the resource for the first NRP based on the configuration information of the first NRP. The first network device may determine, based on a resource utilization status of the first network device, whether there are adequate resources that can be reserved for the first NRP. In addition, the first network device may further determine the status information of the first NRP based on a result of reserving the resource for the first NRP. If the resource is successfully reserved for the first NRP, the status information of the first NRP indicates that the resource of the first NRP is available; or if the resource fails to be reserved for the first NRP, the status information of the first NRP indicates that the resource of the first NRP is unavailable. Correspondingly, when the BGP-LS message is obtained, the BGP-LS message including the determined status information of the first NRP may be obtained based on the determined status information of the first NRP.

In still another specific example, the first network device may obtain the BGP-LS message in response to a failure of the interface associated with the first NRP or unavailability of the resource associated with the first NRP. For example, when detecting the failure of the interface associated with the first NRP, the first network device immediately obtains the BGP-LS message. In this case, the first NLRI may be carried in MP-UNREACH-NLRI in the BGP-LS message, to indicate that the first NRP is an unavailable NRP.

S102: The first network device sends the BGP-LS message to the controller.

After obtaining the BGP-LS message, the first network device may send the BGP-LS message to the controller, to report the information related to the first NRP to the controller. Correspondingly, after receiving the BGP-LS message, the controller may update the NRP resource and the topology information, to subsequently compute the service transmission path for the service based on an updated NRP resource and updated topology information.

According to the solution in this embodiment of this application, when reporting NRP information to the controller, a network device may use an NRP as a granularity of NRP information reporting. The network device may report changed NRP information to the controller, and may not need to report unchanged NRP information to the controller. In this manner, on one hand, the controller can obtain a changed NRP resource and changed topology information in a timely manner, and on the other hand, unnecessary information exchange between the network device and the controller can be reduced.

In an example, in addition to indicating the first NRP associated with the first link, the NRP description information in the first NLRI may further indicate a second NRP associated with the first link. In a specific example, if both the second NRP and the first NRP that are associated with the first link change, the NRP description information in the first NLRI further indicates the second NRP associated with the first link. In this manner, changed information about a plurality of NRPs on the first network device may be reported to the controller by using one BGP-LS message, so that a quantity of messages exchanged between the first network device and the controller can be reduced. Certainly, one BGP-LS message may carry information about only one NRP, and information about the second NRP is reported to the controller by using another BGP-LS message. This is not specifically limited in embodiments of this application.

In an example, if the NRP description information in the first NLRI further indicates the second NRP associated with the first link, the NRP description field further includes an ID of the second NRP, and a name of the second NRP and/or a type of the second NRP. For a manner of carrying the ID of the second NRP, the name of the second NRP, and the type of the second NRP in the first NLRI, refer to the foregoing manner of carrying the ID of the first NRP, the name of the first NRP, and the type of the second NRP in the first NLRI. Details are not described herein again.

Correspondingly, the BGP-LS attribute information is further used to carry an attribute of the second NRP. For specific content included in the attribute of the second NRP and a specific manner of carrying the attribute of the second NRP in the BGP-LS attribute, refer to the foregoing related descriptions of the attribute of the first NRP. Details are not described herein again.

In addition, the BGP-LS attribute information is further used to carry an SID of the second NRP. For a specific manner of carrying the SID of the second NRP in the BGP-LS attribute, refer to the foregoing related descriptions of the SID of the first NRP. Details are not described herein again.

The foregoing describes the method for reporting NRP information provided in embodiments of this application. The following describes, with reference to specific scenarios, the solution provided in embodiments of this application.

FIG. 4a is a diagram of an example application scenario according to an embodiment of this application.

As shown in FIG. 4a, a network device A and a network device B belong to a same network domain.

The following describes the method provided in embodiments of this application by using an example in which the network device A corresponds to the first network device mentioned in the foregoing method embodiment.

An internet protocol version 6 (Internet Protocol version 6, IPv6) address 1000:1::1/64 is configured for a protocol interface of the network device A, and an IPv6 address of a BGP protocol interface that is on the network device B and that is connected to the BGP protocol interface of the network device A is 1000:1::2/64.

A basic NRP ID is configured to 1 on the protocol interface of network device A. Two NRP interfaces are associated with the protocol interface.

An interface index of an NRP interface 1 is 10, an ID of a first-level NRP configured on the NRP interface 1 is 100, and a bandwidth allocated to the NRP interface 1 is 100 Mbit/s.

An interface index of an NRP interface 2 is 20, an ID of a first-level NRP configured on the NRP interface 2 is 200, and a bandwidth allocated to the NRP interface 2 is 200 Mbit/s.

The foregoing information may be advertised, in a flooding manner by using an IGP packet, to all network devices in the network domain to which the network device A belongs. The IGP packet mentioned herein may be, for example, an IS-IS protocol packet.

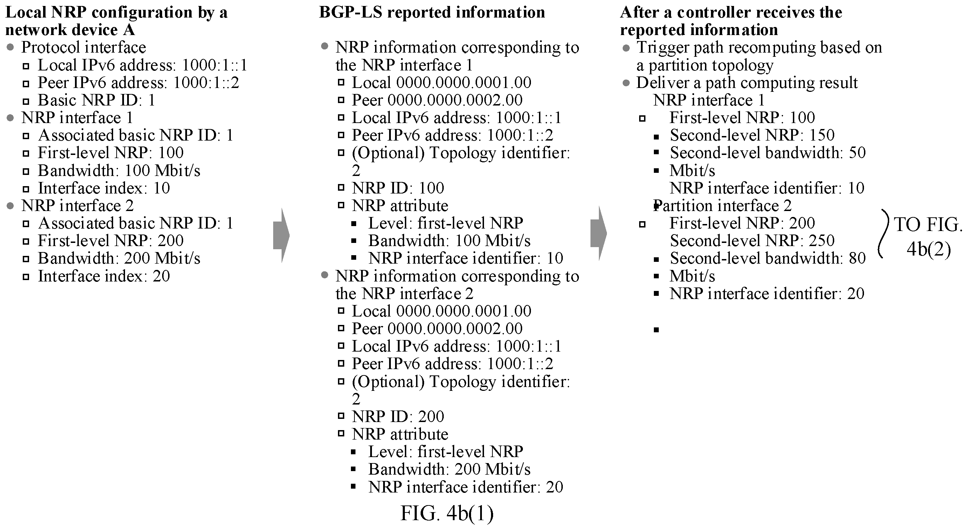

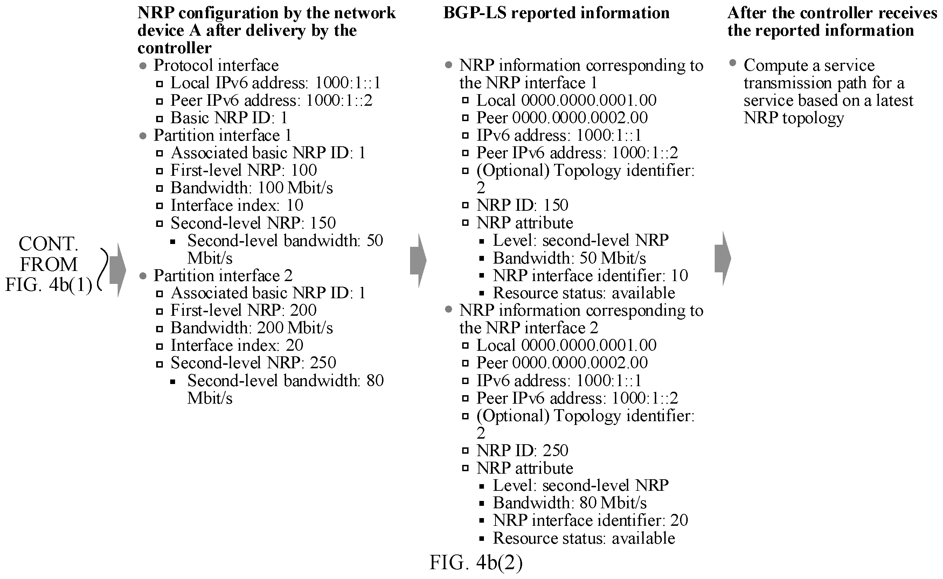

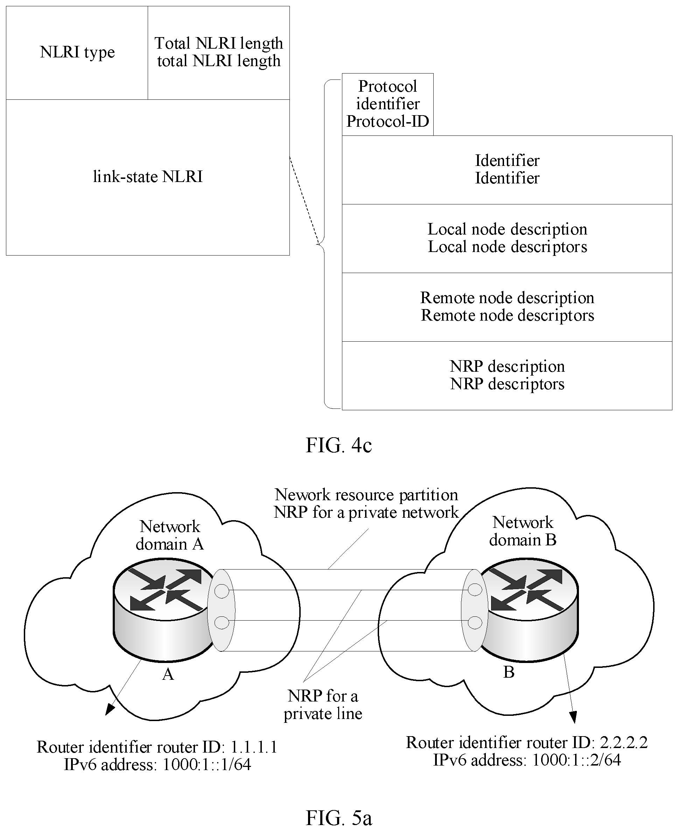

FIG. 4b(1) and FIG. 4b(2) are a diagram of an NRP information reporting process according to an embodiment of this application. FIG. 4c is a diagram of a structure of first NLRI according to an embodiment of this application. The following describes in detail the technical solution provided in embodiments of this application with reference to FIG. 4b(1), FIG. 4b(2), and FIG. 4c.

S1: The network device A obtains a BGP-LS message 1 including NLRI 1, and reports NRP information corresponding to the NRP interface 1 to a controller. Specifically, the following information is reported:
NLRI type: If the NLRI 1 is link NLRI, a value of an NLRI type field is 2; or if the NLRI 1 is NRP link NLRI, a value of an NLRI type field is, for example, 5;
local description information: IS-IS SysId 0000.0000.0001.00;
remote description information: IS-IS SysId 0000.0000.0002.00;
local IPv6 address: 1000:1::1;
peer IPv6 address: 1000:1::2;
topology ID: 2 (an optional field);
NRP ID: 100;
NRP level: first-level NRP;
bandwidth: 100 Mbit/s; and
NRP interface identifier (optional): 10.

Link-state NLRI shown in FIG. 4c is specifically the NLRI 1, and the NLRI 1 includes the following fields:
a protocol identifier (protocol ID) field, an identifier (identifier) field, a local node description (local node descriptors) field, a remote node description (remote node descriptors) field, and an NRP description (NRP descriptors) field.

The protocol identifier (protocol ID) field, the identifier (identifier) field, the local node description (local node descriptors) field, and the remote node description (remote node descriptors) field may inherit definitions of these fields in existing link NLRI. The NRP description (NRP descriptors) field is used to carry NRP description information. In the foregoing information reported to the controller:
the NLRI type may be carried by using the NLRI type field shown in FIG. 4c;
the local description information may be carried by using the local node description field shown in FIG. 4c;
the remote description information may be carried by using the remote node description field shown in FIG. 4c;
the local IPv6 address, the peer IPv6 address, and the topology ID may all be carried by using a link description field shown in FIG. 4c;
the NRP ID may be carried by using the NRP description field shown in FIG. 4c; and
the NRP level, the bandwidth, and the NRP interface identifier may all be carried by using a BGP-LS attribute (not shown in FIG. 4c), and in an example, the BGP-LS attribute may be located, for example, following the NLRI 1, in the BGP-LS message 1, that is, the BGP-LS attribute may be a next field of the first NLRI in the BGP-LS message 1.

The NLRI 1 mentioned herein may correspond to the first NLRI in the foregoing embodiment.

The NLRI 1 may be carried by using MP-REACH-NLRI in the BGP-LS message 1.

When a multi-topology technology is applied to the network domain to which the network device A belongs, the topology ID may indicate a network topology to which the network device belongs. The network domain to which the network device A belongs herein may be, for example, an IS-IS network domain.

S2: The network device A obtains a BGP-LS message 2 including NLRI 2, and reports NRP information corresponding to the NRP interface 2 to the controller. Specifically, the following information is reported:
NLRI type: If the NLRI 2 is link NLRI, a value of an NLRI type field is 2; or if the NLRI 2 is NRP link NLRI, a value of an NLRI type field is, for example, 5;
local description information: IS-IS SysId 0000.0000.0001.00;
remote description information: IS-IS SysId 0000.0000.0002.00;
local IPv6 address: 1000:1::1;
peer IPv6 address: 1000:1::2;
topology ID: 2;
NRP ID: 200;
NRP level: first-level NRP;
bandwidth: 200 Mbit/s; and
NRP interface identifier: 20 (optional).

For fields carrying the information reported in S2, refer to related descriptions in S1. Details are not described herein again.

The NLRI 2 mentioned herein may correspond to the first NLRI in the foregoing embodiment.

The NLRI 2 may be carried by using MP-REACH-NLRI in the BGP-LS message 2.

S3: After receiving the NRP information reported by the network device A, the controller computes a service transmission path for a service.

It is assumed that a result of computing the transmission path for the service is as follows:
a 50 Mbit/s bandwidth is allocated to a second-level NRP whose NRP ID is 150 in the first-level NRP 100 on the NRP interface whose NRP interface identifier is 10; and
an 80 Mbit/s bandwidth needs to be allocated to a second-level NRP whose NRP ID is 250 in the first-level NRP 200 on the NRP interface whose NRP interface identifier is 20.

The controller delivers the NRP configuration information to the network device A by using a network configuration protocol (Network Configuration Protocol, NETCONF), BGP, or a path computation element communication protocol (Path Computation Element Communication Protocol, PCEP).

S4: After receiving the NRP configuration information delivered by the controller, the side of the network device A performs local NRP configuration. Details are as follows.

The network device A additionally configures the second-level NRP whose NRP ID is 150 on the NRP interface whose NRP interface index is 10, and attempts to apply for allocation of a 50 Mbit/s bandwidth. The network device A additionally configures the second-level NRP whose NRP ID is 250 on the NRP interface whose NRP interface index is 20, and attempts to apply for allocation of an 80 Mbit/s bandwidth.

S5: The network device A reports NRP information to the controller based on a result of resource reservation for the second-level NRP, where the NRP information includes the result of resource reservation for the second-level NRP.

Specifically, S5 may include S51 and S52.

S51: The network device A obtains a BGP-LS message 3 including NLRI 3, and reports NRP information corresponding to the NRP ID of 150 to the controller. Specifically, the following information is reported:
NLRI type: If the NLRI 3 is link NLRI, a value of an NLRI type field is 2; or if the NLRI 3 is NRP link NLRI, a value of an NLRI type field is, for example, 5;
local description information: IS-IS SysId 0000.0000.0001.00;
remote description information: IS-IS SysId 0000.0000.0002.00;
local IPv6 address: 1000:1::1;
peer IPv6 address: 1000:1::2;
topology ID: 2 (an optional field);
NRP ID: 150;
NRP level: second-level NRP;
bandwidth: 50 Mbit/s;
NRP interface identifier: 10; and
resource status: available.

The NLRI 3 mentioned herein may correspond to the first NLRI in the foregoing embodiment.

The NLRI 3 may be carried by using MP-REACH-NLRI in the BGP-LS message 3.

S52: The network device A obtains a BGP-LS message 4 including NLRI 4, and reports NRP information corresponding to the NRP ID of 250 to the controller. Specifically, the following information is reported:
NLRI type: If the NLRI 4 is link NLRI, a value of an NLRI type field is 2; or if the NLRI 4 is NRP link NLRI, a value of an NLRI type field is, for example, 5;
local description information: IS-IS SysId 0000.0000.0001.00;
remote description information: IS-IS SysId 0000.0000.0002.00;
local IPv6 address: 1000:1::1;
peer IPv6 address: 1000:1::2;
topology ID: 2 (an optional field);
NRP ID: 250;
NRP level: second-level NRP;
bandwidth: 80 Mbit/s;
NRP interface identifier: 20; and
resource status: available.

The NLRI 4 mentioned herein may correspond to the first NLRI in the foregoing embodiment.

For fields carrying the information reported in S51 and S52, refer to related descriptions in S1. Details are not described herein again.

The NLRI 4 may be carried by using MP-REACH-NLRI in the BGP-LS message 4.

After receiving the NRP information reported by the network device A, the controller may obtain a latest NRP resource and latest topology information based on the received NRP information, to subsequently compute the service transmission path for the service based on the latest NRP resource and the latest topology information.

In an example, if a resource status of an NRP indicates that a resource of the NRP is unavailable, it indicates that the network device fails to reserve the resource for the NRP. In this case, after receiving the NRP information sent by the network device, the controller may output alarm information, or recompute a service transmission path for the service (for example, reduce a required bandwidth, and recompute the service transmission path for the service).

In addition, if an NRP interface of the network device A, for example, the NRP interface 1, fails, the network device A may perform the following step.

S6: Obtain a BGP-LS message 5 including NLRI 5, and report NRP information corresponding to the NRP interface 1 to the controller. Specific reported information is the same as the information reported by using the BGP-LS message 1 in S1. For specific reported content, refer to the foregoing descriptions of S1. Details are not described herein again.

A difference between S6 and S1 lies in that in S1, the NLRI 1 may be carried by using MP-REACH-NLRI in the BGP-LS message 1, while in S6, the NLRI 5 is carried by using MP-UNREACH-NLRI in the BGP-LS message 5.

FIG. 5a is a diagram of an example application scenario according to an embodiment of this application.

As shown in FIG. 5a, a network device A and a network device B belong to different network domains, where the network device A belongs to a network domain A, and the network device B belongs to a network domain B. The network device A and the network device B may interact with each other by using BGP.

The following describes the method provided in embodiments of this application by using an example in which the network device A corresponds to the first network device mentioned in the foregoing method embodiment.

An internet protocol version 6 (Internet Protocol version 6, IPv6) address 1000:1::1/64 is configured for a protocol interface of the network device A, and an IPv6 address of a BGP protocol interface that is on the network device B and that is connected to the BGP protocol interface of the network device A is 1000:1::2/64. A BGP router identifier (router ID) of the network device A is 1.1.1.1, and a BGP router identifier of the network device B is 2.2.2.2. A BGP ID of the protocol interface corresponding to the network device A is 1, and a BGP ID of the protocol interface corresponding to the network device B is 0.

A basic NRP ID is configured to 1 on the protocol interface of network device A. Two NRP interfaces are associated with the protocol interface.

An interface index of an NRP interface 1 is 10, an ID of a first-level NRP configured on the NRP interface 1 is 100, and a bandwidth allocated to the NRP interface 1 is 100 Mbit/s.

An interface index of an NRP interface 2 is 20, an ID of a first-level NRP configured on the NRP interface 2 is 200, and a bandwidth allocated to the NRP interface 2 is 200 Mbit/s.

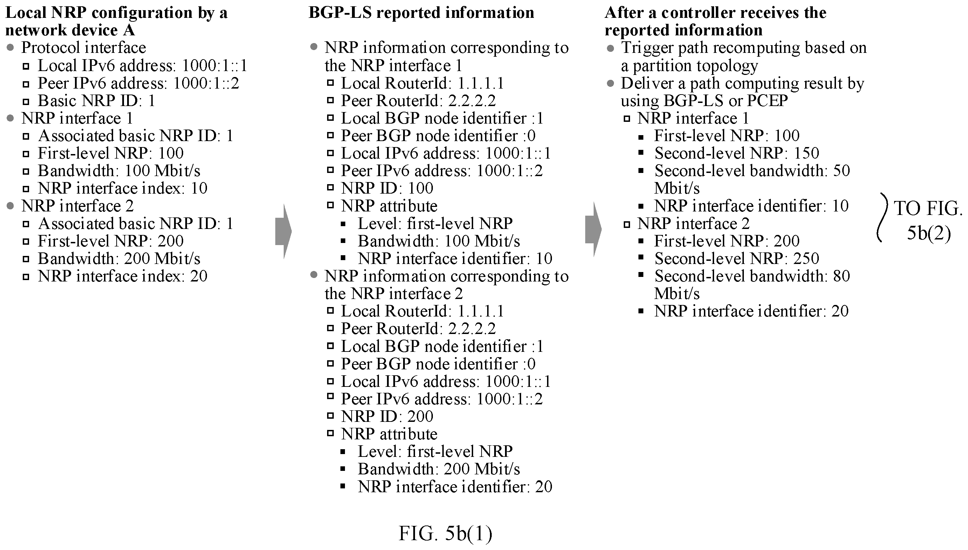

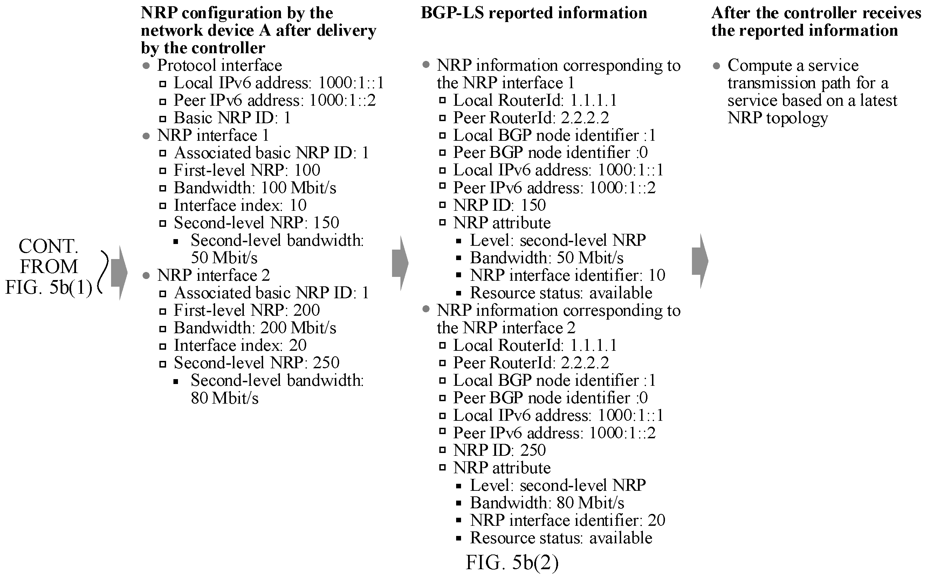

FIG. 5b(1) and FIG. 5b(2) are a diagram of an NRP information reporting process according to an embodiment of this application. The following describes in detail the technical solution provided in embodiments of this application with reference to FIG. 5b(1), FIG. 5b(2), and FIG. 4c.

S1': The network device A obtains a BGP-LS message 1 including NLRI 1, and reports NRP information corresponding to the NRP interface 1 to a controller. Specifically, the following information is reported:
NLRI type: If the NLRI 1 is link NLRI, a value of an NLRI type field is 2; or if the NLRI 1 is NRP link NLRI, a value of an NLRI type field is, for example, 5;
local description information: BGP router ID 1.1.1.1;
remote description information: BGP router ID 2.2.2.2;
local IPv6 address: 1000:1::1;
peer IPv6 address: 1000:1::2;
local BGP node identifier: 1;
peer BGP node identifier: 0;
NRP ID: 100;
NRP level: first-level NRP;
bandwidth: 100 Mbit/s; and
NRP interface identifier (optional): 10.

The NLRI type may be carried by using an NLRI type field shown in FIG. 4c.

The local description information may be carried by using a local node description field shown in FIG. 4c.

The remote description information may be carried by using a remote node description field shown in FIG. 4c.

The local IPv6 address, the peer IPv6 address, the local BGP node identifier, and the peer BGP node identifier may all be carried by using a link description field shown in FIG. 4c.

The NRP ID may be carried by using an NRP description field shown in FIG. 4c.

The NRP level, the bandwidth, and the NRP interface identifier may all be carried by using a BGP-LS attribute (not shown in FIG. 4c). In an example, the BGP-LS attribute may be located, for example, following the NLRI 1, in the BGP-LS message 1, that is, the BGP-LS attribute may be a next field of the first NLRI in the BGP-LS message 1.

The NLRI 1 mentioned herein may correspond to the first NLRI in the foregoing embodiment.

The NLRI 1 may be carried by using MP-REACH-NLRI in the BGP-LS message 1.

S2': The network device A obtains a BGP-LS message 2 including NLRI 2, and reports NRP information corresponding to the NRP interface 2 to the controller. Specifically, the following information is reported:
NLRI type: If the NLRI 2 is link NLRI, a value of an NLRI type field is 2; or if the NLRI 2 is NRP link NLRI, a value of an NLRI type field is, for example, 5;
local description information: BGP router ID 1.1.1.1;
remote description information: BGP router ID 2.2.2.2;
local IPv6 address: 1000:1::1;
peer IPv6 address: 1000:1::2;
local BGP node identifier: 1;
peer BGP node identifier: 0;
NRP level: first-level NRP;
bandwidth: 200 Mbit/s; and
NRP interface identifier: 20 (optional).

For fields carrying the information reported in S2', refer to related descriptions in S1'. Details are not described herein again.

The NLRI 2 mentioned herein may correspond to the first NLRI in the foregoing embodiment.

The NLRI 2 may be carried by using MP-REACH-NLRI in the BGP-LS message 2.

S3': After receiving the NRP information reported by the network device A, the controller computes a service transmission path for a service.

It is assumed that a result of computing the transmission path for the service is as follows:
a 50 Mbit/s bandwidth is allocated to a second-level NRP whose NRP ID is 150 in the first-level NRP 100 on the NRP interface whose NRP interface identifier is 10; and
an 80 Mbit/s bandwidth needs to be allocated to a second-level NRP whose NRP ID is 250 in the first-level NRP 200 on the NRP interface whose NRP interface identifier is 20.

The controller delivers the NRP configuration information to the network device A by using NETCONF, BGP, or a PCEP protocol.

S4': After receiving the NRP configuration information delivered by the controller, the side of the network device A performs local NRP configuration. Details are as follows.

The network device A additionally configures the second-level NRP whose NRP ID is 150 on the NRP interface whose NRP interface index is 10, and attempts to apply for allocation of a 50 Mbit/s bandwidth. The network device A additionally configures the second-level NRP whose NRP ID is 250 on the NRP interface whose NRP interface index is 20, and attempts to apply for allocation of an 80 Mbit/s bandwidth.

S5': The network device A reports NRP information to the controller based on a result of resource reservation for the second-level NRP, where the NRP information includes the result of resource reservation for the second-level NRP.

Specifically, S5 may include S51 and S52.

S51': The network device A obtains a BGP-LS message 3 including NLRI 3, and reports NRP information corresponding to the NRP ID of 150 to the controller. Specifically, the following information is reported:
NLRI type: If the NLRI 3 is link NLRI, a value of an NLRI type field is 2; or if the NLRI 3 is NRP link NLRI, a value of an NLRI type field is, for example, 5;
local description information: BGP router ID 1.1.1.1;
remote description information: BGP router ID 2.2.2.2I;
local IPv6 address: 1000:1::1;
peer IPv6 address: 1000:1::2;
local BGP node identifier: 1;
peer BGP node identifier: 0; NRP ID: 150;
NRP level: second-level NRP;
bandwidth: 50 Mbit/s;
NRP interface identifier: 10; and
resource status: available.

The NLRI 3 mentioned herein may correspond to the first NLRI in the foregoing embodiment.

The NLRI 3 may be carried by using MP-REACH-NLRI in the BGP-LS message 3.

S52': The network device A obtains a BGP-LS message 4 including NLRI 4, and reports NRP information corresponding to the NRP ID of 250 to the controller. Specifically, the following information is reported:
NLRI type: If the NLRI 4 is link NLRI, a value of an NLRI type field is 2; or if the NLRI 4 is NRP link NLRI, a value of an NLRI type field is, for example, 5;
local description information: router ID 1.1.1.1;
remote description information: BGP router ID 2.2.2.2;
local IPv6 address: 1000:1::1;
peer IPv6 address: 1000:1::2;
local BGP node identifier: 1;
peer BGP node identifier: 0;
NRP ID: 250;
NRP level: second-level NRP;
bandwidth: 80 Mbit/s;
NRP interface identifier: 20; and
resource status: available.

The NLRI 4 mentioned herein may correspond to the first NLRI in the foregoing embodiment.

For fields carrying the information reported in S51' and S52', refer to related descriptions in S1'. Details are not described herein again.

The NLRI 4 may be carried by using MP-REACH-NLRI in the BGP-LS message 4.

After receiving the NRP information reported by the network device A, the controller may obtain a latest NRP resource and latest topology information based on the received NRP information, to subsequently compute the service transmission path for the service based on the latest NRP resource and the latest topology information.

In an example, if a resource status of an NRP indicates that a resource of the NRP is unavailable, it indicates that the network device fails to reserve the resource for the NRP. In this case, after receiving the NRP information sent by the network device, the controller may output alarm information, or recompute a service transmission path for the service (for example, reduce a required bandwidth, and recompute the service transmission path for the service).

In addition, if an NRP interface of the network device A, for example, the NRP interface 1, fails, the network device A may perform the following step.

S6': Obtain a BGP-LS message 5 including NLRI 5, and report NRP information corresponding to the NRP interface 1 to the controller. Specific reported information is the same as the information reported by using the BGP-LS message 1 in S1'. For specific reported content, refer to the foregoing descriptions of S1'. Details are not described herein again.

A difference between S6' and S1' lies in that in S1', the NLRI 1 may be carried by using MP-REACH-NLRI in the BGP-LS message 1, while in S6', the NLRI 5 is carried by using MP-UNREACH-NLRI in the BGP-LS message 5.

An embodiment of this application further provides a method for reporting NRP information. The following describes the method with reference to the accompanying drawings.

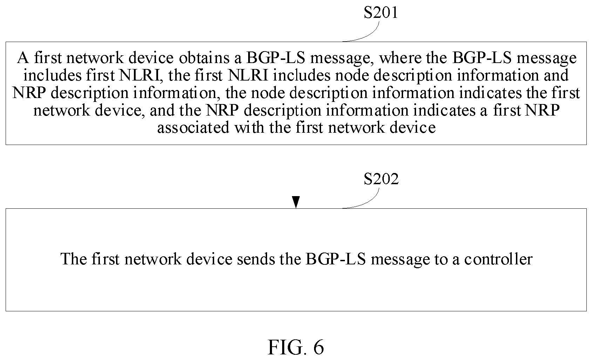

FIG. 6 is a schematic flowchart of a method for reporting NRP information according to an embodiment of this application. The method shown in FIG. 6 may include the following S201 and S202.

S201: A first network device obtains a BGP-LS message, where the BGP-LS message includes first NLRI, the first NLRI includes node description information and NRP description information, the node description information indicates the first network device, and the NRP description information indicates a first NRP associated with the first network device.

The first NLRI is BGP-LS NLRI. The first NLRI includes an NLRI type field, and the NLRI type field indicates a type of the first NLRI.

In an example, the NLRI type field included in the first NLRI indicates that the first NLRI is node NLRI. For example, as shown in Table 3, a value of the NLRI type field included in the first NLRI may be 1, indicating that the first NLRI is node NLRI.

In still another example, a new type of BGP-LS NLRI may be obtained through extension, namely, an NRP node NLRI type. A value of the NLRI type field corresponding to the new type of BGP-LS NLRI obtained through extension may be, for example, 6. In this case, the NLRI type field included in the first NLRI indicates that the first NLRI is NRP node NLRI.

In this embodiment of this application, the first NLRI may be NLRI of an NRP granularity, that is, the first NLRI may be used to report NRP information by using an NRP as a granularity.

In an example, the first NLRI includes a node description field and an NRP description field. The node description field is used to carry information about the first network device, for example, carry an identifier of the first network device. The NRP description field is used to carry the NRP description information. For the NRP description information, refer to related descriptions in the method shown in FIG. 3. Details are not described herein again.

In an example, in addition to the first NLRI, the BGP-LS message may further include a BGP-LS attribute. The BGP-LS attribute is used to carry an attribute of the first NRP. In this manner, both the description information of the first NRP and the attribute of the first NRP may be carried in the BGP-LS message. For related content of the BGP-LS attribute and the attribute of the first NRP, refer to related descriptions in the method shown in FIG. 3. Details are not described herein again.

In an example, the BGP-LS attribute is further used to carry an SID of the first NRP. For a specific implementation in which the BGP-LS attribute carries the SID of the first NRP, refer to descriptions in the embodiment shown in FIG. 3. Details are not described herein again.

In this embodiment of this application, the first network device may obtain the BGP-LS message when the NRP information of the first network device changes. For a scenario in which the NRP information of the first network device changes, refer to related descriptions in the method shown in FIG. 3. Details are not described herein again.

In an example, the first NLRI further includes local node description information. Specifically, the first NLRI further includes a local node description field, and the local node description field is used to carry the local node description information. The local node mentioned herein may be the first network device.

S202: The first network device sends the BGP-LS message to a controller.

After obtaining the BGP-LS message, the first network device may send the BGP-LS message to the controller, to report the information related to the first NRP to the controller. Correspondingly, after receiving the BGP-LS message, the controller may update an NRP resource and topology information, to subsequently compute a service transmission path for a service based on an updated NRP resource and updated topology information.

According to the solution in this embodiment of this application, when reporting NRP information to the controller, a network device may use an NRP as a granularity of NRP information reporting. The network device may report changed NRP information to the controller. In this manner, on one hand, the controller can obtain a changed NRP resource and changed topology information in a timely manner, and on the other hand, unnecessary information exchange between the network device and the controller can be reduced.

The following describes, with reference to a network scenario shown in FIG. 4a and a network scenario shown in FIG. 5a, the method shown in FIG. 6 is described by using an example in which a network device A corresponds to the first network device mentioned in the method embodiment corresponding to FIG. 6.

First, an NRP information reporting process corresponding to the network scenario shown in FIG. 4a is described.

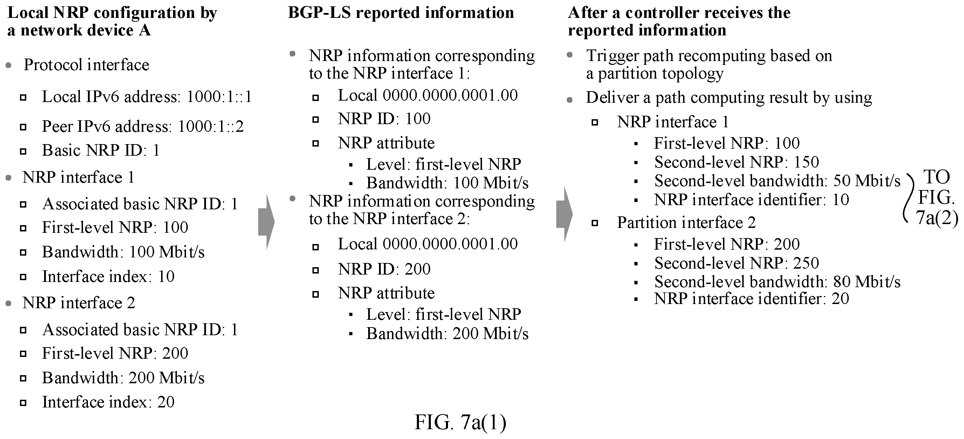

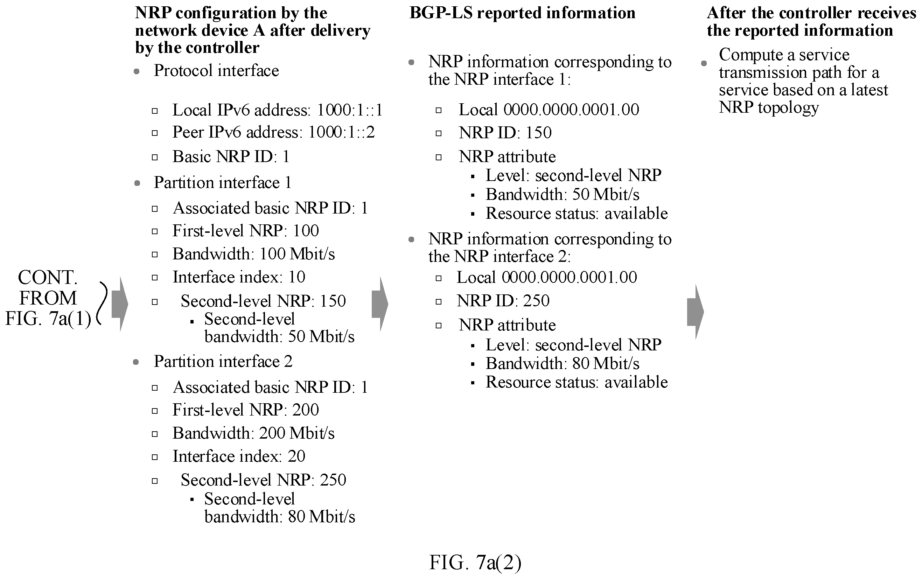

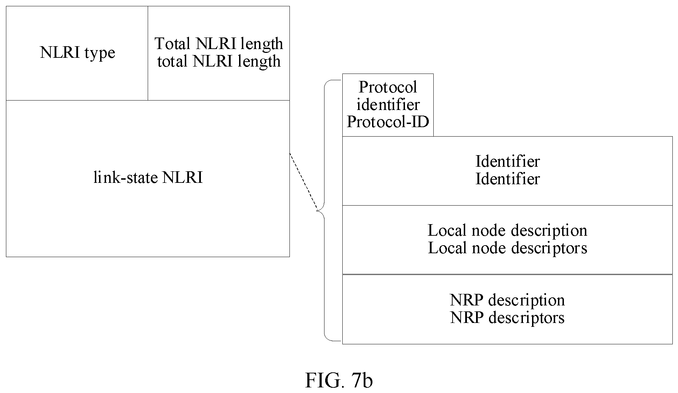

FIG. 7a(1) and FIG. 7a(2) are a diagram of still another NRP information reporting process according to an embodiment of this application. FIG. 7b is a diagram of a structure of still another piece of first NLRI according to an embodiment of this application. The following describes in detail the technical solution provided in embodiments of this application with reference to FIG. 7a(1), FIG. 7a(2), and FIG. 7b.

S7: The network device A obtains a BGP-LS message 1 including NLRI 1, and reports NRP information corresponding to the NRP interface 1 to a controller. Specifically, the following information is reported:
NLRI type: If the NLRI 1 is node NLRI, a value of an NLRI type field is 1; or if the NLRI 1 is NRP node NLRI, a value of an NLRI type field is, for example, 6;
local description information: IS-IS SysId 0000.0000.0001.00;
NRP ID: 100;
NRP level: first-level NRP; and
bandwidth: 100 Mbit/s.

Link-state NLRI shown in FIG. 7b is specifically the NLRI 1, and the NLRI 1 includes the following fields:
a protocol identifier (protocol ID) field, an identifier (identifier) field, a local node description (local node descriptors) field, and an NRP description (NRP descriptors) field.

The protocol identifier (protocol ID) field, the identifier (identifier) field, and the local node description (local node descriptors) field may inherit definitions of these fields in existing node NLRI. The NRP description (NRP descriptors) field is used to carry NRP description information. In the foregoing information reported to the controller:
the NLRI type may be carried by using the NLRI type field shown in FIG. 7b;
the local description information may be carried by using the local node description field shown in FIG. 7b;
the NRP ID may be carried by using the NRP description field shown in FIG. 7b; and
both the NRP level and the bandwidth may be carried by using a BGP-LS attribute (not shown in FIG. 7b), and in an example, the BGP-LS attribute may be located, for example, following the NLRI 1, in the BGP-LS message 1, that is, the BGP-LS attribute may be a next field of the first NLRI in the BGP-LS message 1.

The NLRI 1 mentioned herein may correspond to the first NLRI in the embodiment corresponding to FIG. 6.

The NLRI 1 may be carried by using MP-REACH-NLRI in the BGP-LS message 1.

S8: The network device A obtains a BGP-LS message 2 including NLRI 2, and reports NRP information corresponding to the NRP interface 2 to the controller. Specifically, the following information is reported:
NLRI type: If the NLRI 2 is node NLRI, a value of an NLRI type field is 1; or if the NLRI 2 is NRP node NLRI, a value of an NLRI type field is, for example, 6;
local description information: IS-IS SysId 0000.0000.0001.00;
NRP ID: 200;
NRP level: first-level NRP; and
bandwidth: 200 Mbit/s.

For fields carrying the information reported in S8, refer to related descriptions in S7. Details are not described herein again.

The NLRI 2 mentioned herein may correspond to the first NLRI in the embodiment corresponding to FIG. 6.

The NLRI 2 may be carried by using MP-REACH-NLRI in the BGP-LS message 2.

S9: After receiving the NRP information reported by the network device A, the controller computes a service transmission path for a service.

It is assumed that a result of computing the transmission path for the service is as follows:
a 50 Mbit/s bandwidth is allocated to a second-level NRP whose NRP ID is 150 in the first-level NRP 100 on the NRP interface whose NRP interface identifier is 10; and
an 80 Mbit/s bandwidth needs to be allocated to a second-level NRP whose NRP ID is 250 in the first-level NRP 200 on the NRP interface whose NRP interface identifier is 20.

The controller delivers the NRP configuration information to the network device A by using NETCONF, BGP, or PCEP.

S10: After receiving the NRP configuration information delivered by the controller, the side of the network device A performs local NRP configuration. Details are as follows.

The network device A additionally configures the second-level NRP whose NRP ID is 150 on the NRP interface whose NRP interface index is 10, and attempts to apply for allocation of a 50 Mbit/s bandwidth. The network device A additionally configures the second-level NRP whose NRP ID is 250 on the NRP interface whose NRP interface index is 20, and attempts to apply for allocation of an 80 Mbit/s bandwidth.

S11: The network device A reports NRP information to the controller based on a result of resource reservation for the second-level NRP, where the NRP information includes the result of resource reservation for the second-level NRP.

Specifically, S11 may include S111 and S112.

S111: The network device A obtains a BGP-LS message 3 including NLRI 3, and reports NRP information corresponding to the NRP ID of 150 to the controller. Specifically, the following information is reported:
NLRI type: If the NLRI 3 is node NLRI, a value of an NLRI type field is 1; or if the NLRI 3 is NRP node NLRI, a value of an NLRI type field is, for example, 6;
local description information: IS-IS SysId 0000.0000.0001.00;
NRP ID: 150;
NRP level: second-level NRP;
bandwidth: 50 Mbit/s; and
resource status: available.

The NLRI 3 mentioned herein may correspond to the first NLRI in the embodiment corresponding to FIG. 6.

The NLRI 3 may be carried by using MP-REACH-NLRI in the BGP-LS message 3.

S112: The network device A obtains a BGP-LS message 4 including NLRI 4, and reports NRP information corresponding to the NRP ID of 250 to the controller. Specifically, the following information is reported:
NLRI type: If the NLRI 4 is node NLRI, a value of an NLRI type field is 1; or if the NLRI 4 is NRP node NLRI, a value of an NLRI type field is, for example, 6;
local description information: IS-IS SysId 0000.0000.0001.00;
NRP ID: 250;
NRP level: second-level NRP;
bandwidth: 80 Mbit/s; and
resource status: available.

The NLRI 4 mentioned herein may correspond to the first NLRI in the embodiment corresponding to FIG. 6.

For fields carrying the information reported in S111 and S112, refer to related descriptions in S7. Details are not described herein again.

The NLRI 4 may be carried by using MP-REACH-NLRI in the BGP-LS message 4.

After receiving the NRP information reported by the network device A, the controller may obtain a latest NRP resource and latest topology information based on the received NRP information, to subsequently compute the service transmission path for the service based on the latest NRP resource and the latest topology information.

In an example, if a resource status of an NRP indicates that a resource of the NRP is unavailable, it indicates that the network device fails to reserve the resource for the NRP. In this case, after receiving the NRP information sent by the network device, the controller may output alarm information, or recompute a service transmission path for the service (for example, reduce a required bandwidth, and recompute the service transmission path for the service).

In addition, if an NRP interface of the network device A, for example, the NRP interface 1, fails, the network device A may perform the following step.

S12: Obtain a BGP-LS message 5 including NLRI 5, and report NRP information corresponding to the NRP interface 1 to the controller. Specific reported information is the same as the information reported by using the BGP-LS message 1 in S7. For specific reported content, refer to the foregoing descriptions of S7. Details are not described herein again.

A difference between S12 and S7 lies in that in S7, the NLRI 1 may be carried by using MP-REACH-NLRI in the BGP-LS message 1, while in S12, the NLRI 5 is carried by using MP-UNREACH-NLRI in the BGP-LS message 5.

Then, an NRP information reporting process corresponding to the network scenario shown in FIG. 5a is described.

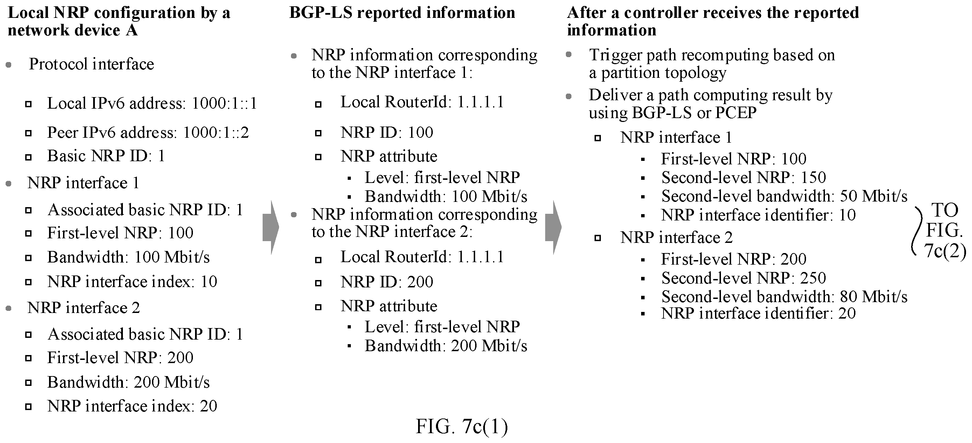

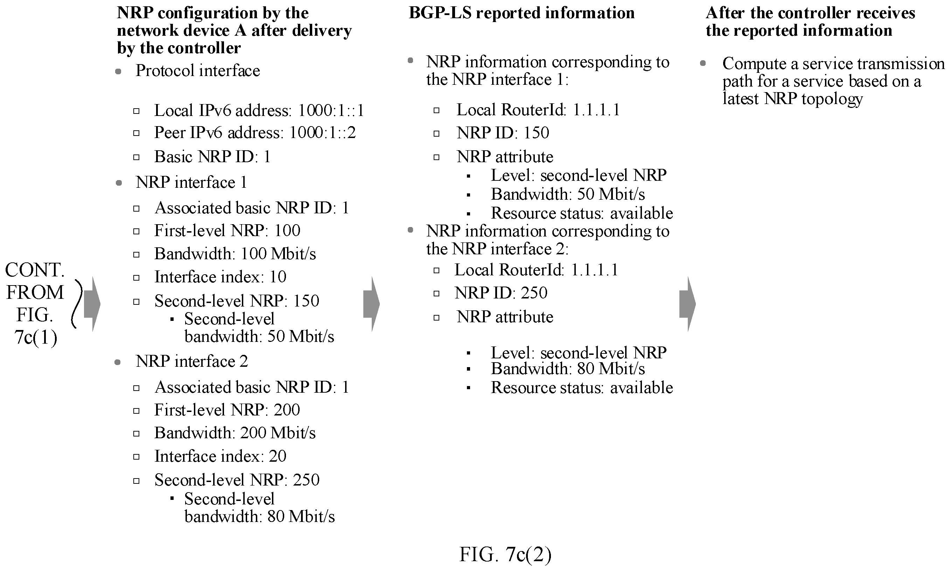

FIG. 7c(1) and FIG. 7c(2) are a diagram of an NRP information reporting process according to an embodiment of this application. The following describes in detail the technical solution provided in embodiments of this application with reference to FIG. 7b, FIG. 7c(1), and FIG. 7c(2).

S7': The network device A obtains a BGP-LS message 1 including NLRI 1, and reports NRP information corresponding to the NRP interface 1 to the controller. Specifically, the following information is reported:
NLRI type: If the NLRI 1 is node NLRI, a value of an NLRI type field is 1; or if the NLRI 1 is NRP node NLRI, a value of an NLRI type field is, for example, 6;
local description information: BGP router ID 1.1.1.1;
NRP ID: 100;
NRP level: first-level NRP; and
bandwidth: 100 Mbit/s.

The NLRI type may be carried by using an NLRI type field shown in FIG. 7b.

The local description information may be carried by using a local node description field shown in FIG. 7b.

The NRP ID may be carried by using an NRP description field shown in FIG. 7b.

Both the NRP level and the bandwidth may be carried by using a BGP-LS attribute (not shown in FIG. 7b). In an example, the BGP-LS attribute may be located, for example, following the NLRI 1, in the BGP-LS message 1, that is, the BGP-LS attribute may be a next field of the first NLRI in the BGP-LS message 1.

The NLRI 1 mentioned herein may correspond to the first NLRI in the embodiment corresponding to FIG. 6.

The NLRI 1 may be carried by using MP-REACH-NLRI in the BGP-LS message 1.

S8': The network device A obtains a BGP-LS message 2 including NLRI 2, and reports NRP information corresponding to the NRP interface 2 to the controller. Specifically, the following information is reported:
NLRI type: If the NLRI 2 is node NLRI, a value of an NLRI type field is 1; or if the NLRI 2 is NRP node NLRI, a value of an NLRI type field is, for example, 6;
local description information: BGP router ID 1.1.1.1;
NRP level: first-level NRP; and
bandwidth: 200 Mbit/s.

For fields carrying the information reported in S8', refer to related descriptions in S7'. Details are not described herein again.

The NLRI 2 mentioned herein may correspond to the first NLRI in the embodiment corresponding to FIG. 6.

The NLRI 2 may be carried by using MP-REACH-NLRI in the BGP-LS message 2.

S9': After receiving the NRP information reported by the network device A, the controller computes a service transmission path for a service.

It is assumed that a result of computing the transmission path for the service is as follows:
a 50 Mbit/s bandwidth is allocated to a second-level NRP whose NRP ID is 150 in the first-level NRP 100 on the NRP interface whose NRP interface identifier is 10; and
an 80 Mbit/s bandwidth needs to be allocated to a second-level NRP whose NRP ID is 250 in the first-level NRP 200 on the NRP interface whose NRP interface identifier is 20.

The controller delivers the NRP configuration information to the network device A by using NETCONF, BGP, or PCEP.

S10': After receiving the NRP configuration information delivered by the controller, the side of the network device A performs local NRP configuration. Details are as follows.

The network device A additionally configures the second-level NRP whose NRP ID is 150 on the NRP interface whose NRP interface index is 10, and attempts to apply for allocation of a 50 Mbit/s bandwidth. The network device A additionally configures the second-level NRP whose NRP ID is 250 on the NRP interface whose NRP interface index is 20, and attempts to apply for allocation of an 80 Mbit/s bandwidth.

S11': The network device A reports NRP information to the controller based on a result of resource reservation for the second-level NRP, where the NRP information includes the result of resource reservation for the second-level NRP.

Specifically, S11 may include S111 and S112.

S111': The network device A obtains a BGP-LS message 3 including NLRI 3, and reports NRP information corresponding to the NRP ID of 150 to the controller. Specifically, the following information is reported:
NLRI type: If the NLRI 3 is node NLRI, a value of an NLRI type field is 1; or if the NLRI 3 is NRP node NLRI, a value of an NLRI type field is, for example, 6;
local description information: BGP router ID 1.1.1.1;
NRP ID: 150;
NRP level: second-level NRP;
bandwidth: 50 Mbit/s; and
resource status: available.

The NLRI 3 mentioned herein may correspond to the first NLRI in the embodiment corresponding to FIG. 6.

The NLRI 3 may be carried by using MP-REACH-NLRI in the BGP-LS message 3.

S112': The network device A obtains a BGP-LS message 4 including NLRI 4, and reports NRP information corresponding to the NRP ID of 250 to the controller. Specifically, the following information is reported:
NLRI type: If the NLRI 4 is node NLRI, a value of an NLRI type field is 1; or if the NLRI 4 is NRP node NLRI, a value of an NLRI type field is, for example, 6;
local description information: router ID 1.1.1.1;
NRP ID: 250;
NRP level: second-level NRP;
bandwidth: 80 Mbit/s; and
resource status: available.

The NLRI 4 mentioned herein may correspond to the first NLRI in the embodiment corresponding to FIG. 6.

For fields carrying the information reported in S111' and S112', refer to related descriptions in S7'. Details are not described herein again.

The NLRI 4 may be carried by using MP-REACH-NLRI in the BGP-LS message 4.

After receiving the NRP information reported by the network device A, the controller may obtain a latest NRP resource and latest topology information based on the received NRP information, to subsequently compute the service transmission path for the service based on the latest NRP resource and the latest topology information.

In an example, if a resource status of an NRP indicates that a resource of the NRP is unavailable, it indicates that the network device fails to reserve the resource for the NRP. In this case, after receiving the NRP information sent by the network device, the controller may output alarm information, or recompute a service transmission path for the service (for example, reduce a required bandwidth, and recompute the service transmission path for the service).

In addition, if an NRP interface of the network device A, for example, the NRP interface 1, fails, the network device A may perform the following step.

S12': Obtain a BGP-LS message 5 including NLRI 5, and report NRP information corresponding to the NRP interface 1 to the controller. Specific reported information is the same as the information reported by using the BGP-LS message 1 in S7'. For specific reported content, refer to the foregoing descriptions of S7'. Details are not described herein again.

A difference between S12' and S7' lies in that in S7', the NLRI 1 may be carried by using MP-REACH-NLRI in the BGP-LS message 1, while in S12', the NLRI 5 is carried by using MP-UNREACH-NLRI in the BGP-LS message 5.

Based on the method provided in the foregoing method embodiments, an embodiment of this application further provides a corresponding apparatus. The following describes the apparatus with reference to the accompanying drawings.

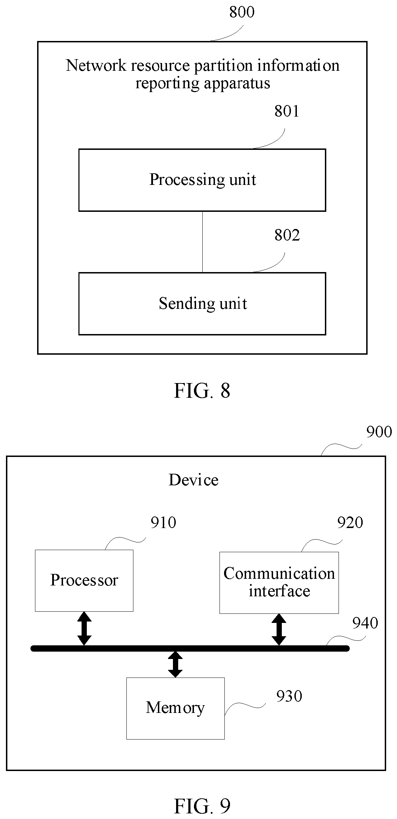

FIG. 8 is a diagram of a structure of an apparatus for reporting network resource partition information according to an embodiment of this application. The apparatus 800 shown in FIG. 8 may be configured to perform the method provided in the foregoing method embodiments. Specifically, the apparatus 800 may be configured to perform the method shown in FIG. 3 or the method shown in FIG. 6. As shown in FIG. 8, the apparatus 800 includes a processing unit 801 and a sending unit 802.

In a specific example, when the apparatus 800 is configured to perform the method shown in FIG. 3:
the processing unit 801 is configured to obtain a border gateway protocol link-state BGP-LS message, where the BGP-LS message includes first network layer reachability information NLRI, the first NLRI includes link description information and network resource partition NRP description information, the link description information indicates a first link, and the NRP description information indicates a first NRP associated with the first link; and
the sending unit 802 is configured to send the BGP-LS message to a controller.

In a possible implementation, an NLRI type field included in the first NLRI indicates that the first NLRI is link NLRI.

In a possible implementation, an NLRI type field included in the first NLRI indicates that the first NLRI is NRP link NLRI.

In a possible implementation, the NRP description information includes an NRP identifier ID, and the NRP ID identifies the first NRP.

In a possible implementation, the NRP description information further includes an NRP name and/or an NRP type, where the NRP name is a name of the first NRP, the NRP type indicates a use of the first NRP, and the use of the first NRP includes education, healthcare, or manufacturing.

In a possible implementation, the BGP-LS message further includes a BGP-LS attribute, the BGP-LS attribute information is used to carry an attribute of the first NRP, and the attribute of the first NRP includes at least one of the following: resource information of the first NRP, status information of the first NRP, and hierarchy information of the first NRP.

In a possible implementation, the resource information includes a resource allocated to a logical interface associated with the first NRP and/or the first NRP.

In a possible implementation, the status information of the first NRP includes a status of a resource of the first NRP, where the status of the resource indicates whether the resource is available and/or a utilization status of the resource.

In a possible implementation, the hierarchy information of the first NRP indicates that the first NRP is a first-level NRP or a second-level NRP.

In a possible implementation, the processing unit 801 is configured to obtain the BGP-LS message in response to being configured with the first NRP.

In a possible implementation, being configured with the first NRP includes: receiving configuration information of the first NRP delivered by the controller, where the configuration information includes at least the NRP description information.

In a possible implementation, the processing unit 801 is configured to: reserve the resource for the first NRP based on the configuration information of the first NRP, and determine the status information of the first NRP based on a result of reserving the resource for the first NRP, where if the resource is successfully reserved for the first NRP, the status information of the first NRP indicates that the resource of the first NRP is available, or if the resource fails to be reserved for the first status information, the status information of the first NRP indicates that the resource of the first NRP is unavailable; and obtain the BGP-LS message including the status information of the first NRP.

In a possible implementation, the processing unit 801 is configured to obtain the BGP-LS message in response to a failure of the interface associated with the first NRP or unavailability of a resource associated with the first NRP.

In a possible implementation, the NRP description information further indicates a second NRP associated with the first link.

In another specific example, when the apparatus 800 is configured to perform the method shown in FIG. 6:
the processing unit 801 is configured to obtain a border gateway protocol link-state BGP-LS message, where the BGP-LS message includes first network layer reachability information NLRI, the first NLRI includes node description information and network resource partition NRP description information, the node description information indicates a first network device, and the NRP description information indicates a first NRP associated with the first network device; and
the sending unit 802 is configured to send the BGP-LS message to a controller.

In a possible implementation, an NLRI type field included in the first NLRI indicates that the first NLRI is node NLRI.

In a possible implementation, an NLRI type field included in the first NLRI indicates that the first NLRI is NRP node NLRI.

In a possible implementation, the NRP description information includes an NRP identifier ID, and the NRP ID identifies the first NRP.

In a possible implementation, the NRP description information further includes an NRP name and/or an NRP type, where the NRP name is a name of the first NRP, the NRP type indicates a use of the first NRP, and the use of the first NRP includes education, healthcare, or manufacturing.

In a possible implementation, the BGP-LS message further includes a BGP-LS attribute, the BGP-LS attribute information is used to carry an attribute of the first NRP, and the attribute of the first NRP includes at least one of the following: resource information of the first NRP, status information of the first NRP, and hierarchy information of the first NRP.

In a possible implementation, the resource information includes a resource allocated to a logical interface associated with the first NRP and/or the first NRP.

In a possible implementation, the status information of the first NRP includes a status of a resource of the first NRP, where the status of the resource indicates whether the resource is available and/or a utilization status of the resource.

In a possible implementation, the hierarchy information of the first NRP indicates that the first NRP is a first-level NRP or a second-level NRP.

In a possible implementation, the processing unit 801 is configured to obtain the BGP-LS message in response to being configured with the first NRP.

In a possible implementation, being configured with the first NRP includes: receiving configuration information of the first NRP delivered by the controller, where the configuration information includes at least the NRP description information.

In a possible implementation, the processing unit 801 is configured to: reserve the resource for the first NRP based on the configuration information of the first NRP, and determine the status information of the first NRP based on a result of reserving the resource for the first NRP, where if the resource is successfully reserved for the first NRP, the status information of the first NRP indicates that the resource of the first NRP is available, or if the resource fails to be reserved for the first NRP, the status information of the first NRP indicates that the resource of the first NRP is unavailable; and obtain the BGP-LS message including the status information of the first NRP.

In a possible implementation, the processing unit 801 is configured to obtain the BGP-LS message in response to a failure of the interface associated with the first NRP or unavailability of a resource associated with the first NRP.

In a possible implementation, the NRP description information further indicates a second NRP associated with the first link.

It should be noted that a hardware structure of the apparatus 800 mentioned above may be a structure shown in FIG. 9. FIG. 9 is a diagram of a structure of a device according to an embodiment of this application.

Refer to FIG. 9. The device 900 includes a processor 910, a communication interface 920, and a memory 930. There may be one or more processors 910 in the device 900, and one processor is used as an example in FIG. 9. In this embodiment of this application, the processor 910, the communication interface 920, and the memory 930 may be connected through a bus system or in another manner. An example in which the processor 910, the communication interface 920, and the memory 930 are connected through a bus system 940 is used in FIG. 9.

The processor 910 may be a central processing unit (central processing unit, CPU), an NP, or a combination of a CPU and an NP. The processor 910 may further include a hardware chip. The hardware chip may be an ASIC, a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The memory 930 may include a volatile memory (English: volatile memory), for example, a random access memory (random access memory, RAM). Alternatively, the memory 930 may include a non-volatile memory (English: non-volatile memory), for example, a flash memory (English: flash memory), a hard disk drive (hard disk drive, HDD), or a solid-state drive (solid-state drive, SSD). Alternatively, the memory 930 may include a combination of the foregoing types of memories. For example, the memory 930 may store the foregoing identifier of the first NRP and the attribute of the first NRP.

Optionally, the memory 930 stores an operating system and a program, an executable module, or a data structure, a subset thereof, or an extended set thereof. The program may include various operation instructions, to implement various operations. The operating system may include various system programs, to implement various basic services and process a hardware-based task. The processor 910 may read the program in the memory 930, to implement the method provided in embodiments of this application.

The bus system 940 may be a peripheral component interconnect (peripheral component interconnect, PCI) bus, an extended industry standard architecture (extended industry standard architecture, EISA) bus, or the like. The bus system 940 may be classified into an address bus, a data bus, a control bus, and the like. For ease of representation, only one thick line is used to represent the bus in FIG. 9, but this does not mean that there is only one bus or only one type of bus.

An embodiment of this application provides a computer-readable storage medium, including instructions or a computer program. When the instructions or the computer program is run on a computer, the computer is enabled to perform the method in the foregoing method embodiments.

An embodiment of this application provides a computer program product including instructions or a computer program. When the computer program product runs on a computer, the computer is enabled to perform the method in the foregoing method embodiments.

In the specification, claims, and accompanying drawings of this application, the terms "first", "second", "third", "fourth", and so on (if existent) are intended to distinguish between similar objects but do not necessarily indicate a specific order or sequence. It should be understood that data termed in such a way is interchangeable in appropriate circumstances, so that embodiments described herein can be implemented in other orders than the order illustrated or described herein. In addition, the terms "include" and "have" and any other variants thereof are intended to cover a non-exclusive inclusion. For example, a process, a method, a system, a product, or a device that includes a list of steps or units is not necessarily limited to those expressly listed steps or units, but may include other steps or units not expressly listed or inherent to the process, the method, the product, or the device.

It may be clearly understood by a person skilled in the art that for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located at one position, or may be distributed on a plurality of network units. A part or all of the units may be selected based on actual requirements to achieve the objectives of the solutions of embodiments.

In addition, the service units in embodiments of this application may be integrated into one processing unit, each of the units may exist alone physically, or two or more units may be integrated into one unit. The integrated unit may be implemented in a form of hardware, or may be implemented in a form of a software service unit.

If the integrated unit is implemented in the form of the software service unit and sold or used as a separate product, the integrated unit may be stored in a computer-readable storage medium. Based on such an understanding, the technical solutions of this application essentially, or the part contributing to the prior art, or all or a part of the technical solutions may be implemented in a form of a software product. The computer software product is stored in a storage medium and includes several instructions for instructing a computer device (which may be a personal computer, a server, or a network device) to perform all or a part of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

A person skilled in the art should be aware that in the foregoing one or more examples, services described in the present invention may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another. The storage medium may be any usable medium accessible to a general-purpose or special-purpose computer.

The objectives, technical solutions, and beneficial effects of the present invention have been described in further detail in the foregoing specific implementations. It should be understood that the foregoing descriptions are merely specific implementations of the present invention.

The foregoing embodiments are merely used to describe the technical solutions of this application, but not to limit the technical solutions. Although this application is described in detail with reference to the foregoing embodiments, a person of ordinary skill in the art should understand that modifications may still be made to the technical solutions described in the foregoing embodiments or equivalent replacements are made to a part of technical features thereof, without departing from the scope of the technical solutions in embodiments of this application.

## Claims

1. A method for reporting network resource partition information, wherein the method comprises:
obtaining, by a first network device, a border gateway protocol link-state BGP-LS message, wherein the BGP-LS message comprises first network layer reachability information NLRI, the first NLRI comprises link description information and network resource partition NRP description information, the link description information indicates a first link, and the NRP description information indicates a first NRP associated with the first link; and
sending, by the first network device, the BGP-LS message to a controller.

2. The method according to claim 1, wherein an NLRI type field comprised in the first NLRI indicates that the first NLRI is link NLRI.

3. The method according to claim 1, wherein an NLRI type field comprised in the first NLRI indicates that the first NLRI is NRP link NLRI.

4. The method according to any one of claims 1 to 3, wherein the NRP description information comprises an NRP identifier ID, and the NRP ID identifies the first NRP.

5. The method according to claim 4, wherein the NRP description information further comprises:
an NRP name and/or an NRP type, wherein the NRP name is a name of the first NRP, the NRP type indicates a use of the first NRP, and the use of the first NRP comprises education, healthcare, or manufacturing.

6. The method according to any one of claims 1 to 5, wherein the BGP-LS message further comprises a BGP-LS attribute, the BGP-LS attribute information is used to carry an attribute of the first NRP, and the attribute of the first NRP comprises at least one of the following:
resource information of the first NRP, status information of the first NRP, and hierarchy information of the first NRP.

7. The method according to claim 6, wherein the resource information comprises:
a resource allocated to a logical interface associated with the first NRP and/or the first NRP.

8. The method according to claim 6, wherein the status information of the first NRP comprises:
a status of a resource of the first NRP, wherein the status of the resource indicates whether the resource is available and/or a utilization status of the resource.

9. The method according to claim 6, wherein the hierarchy information of the first NRP indicates a level of the first NRP.

10. The method according to any one of claims 1 to 9, wherein the obtaining, by the first network device, the border gateway protocol link-state BGP-LS message comprises:
obtaining, by the first network device, the BGP-LS message in response to being configured with the first NRP.

11. The method according to claim 10, wherein that the network device is configured with the first NRP comprises:
the first network device receives configuration information of the first NRP delivered by the controller, wherein the configuration information comprises at least the NRP description information.

12. The method according to claim 11, wherein the method further comprises:
reserving, by the first network device, the resource for the first NRP based on the configuration information of the first NRP, and determining the status information of the first NRP based on a result of reserving the resource for the first NRP, wherein if the resource is successfully reserved for the first NRP, the status information of the first NRP indicates that the resource of the first NRP is available, or if the resource fails to be reserved for the first status information, the status information of the first NRP indicates that the resource of the first NRP is unavailable; and
correspondingly, the obtaining, by the first network device, the border gateway protocol link-state BGP-LS message comprises:
obtaining, by the first network device, the BGP-LS message comprising the status information of the first NRP.

13. The method according to any one of claims 1 to 9, wherein the obtaining, by the first network device, the border gateway protocol link-state BGP-LS message comprises:
obtaining, by the first network device, the BGP-LS message in response to a failure of the interface associated with the first NRP or unavailability of a resource associated with the first NRP.

14. The method according to any one of claims 1 to 13, wherein the NRP description information further indicates a second NRP associated with the first link.

15. A method for reporting network resource partition information, wherein the method comprises:
obtaining, by a first network device, a border gateway protocol link-state BGP-LS message, wherein the BGP-LS message comprises first network layer reachability information NLRI, the first NLRI comprises node description information and network resource partition NRP description information, the node description information indicates the first network device, and the NRP description information indicates a first NRP associated with the first network device; and
sending, by the first network device, the BGP-LS message to a controller.

16. The method according to claim 15, wherein an NLRI type field comprised in the first NLRI indicates that the first NLRI is node NLRI.

17. The method according to claim 15, wherein an NLRI type field comprised in the first NLRI indicates that the first NLRI is NRP node NLRI.

18. The method according to any one of claims 15 to 17, wherein the NRP description information comprises an NRP identifier ID, and the NRP ID identifies the first NRP.

19. The method according to claim 18, wherein the NRP description information further comprises:
an NRP name and/or an NRP type, wherein the NRP name is a name of the first NRP, the NRP type indicates a use of the first NRP, and the use of the first NRP comprises education, healthcare, or manufacturing.

20. The method according to any one of claims 15 to 19, wherein the BGP-LS message further comprises a BGP-LS attribute, the BGP-LS attribute information is used to carry an attribute of the first NRP, and the attribute of the first NRP comprises at least one of the following:
resource information of the first NRP, status information of the first NRP, and hierarchy information of the first NRP.

21. The method according to claim 20, wherein the resource information comprises:
a resource allocated to a logical interface associated with the first NRP and/or the first NRP.

22. The method according to claim 20, wherein the status information of the first NRP comprises:
a status of a resource of the first NRP, wherein the status of the resource indicates whether the resource is available and/or a utilization status of the resource.

23. The method according to claim 20, wherein the hierarchy information of the first NRP indicates a level of the first NRP.

24. The method according to any one of claims 15 to 23, wherein the obtaining, by the first network device, the border gateway protocol link-state BGP-LS message comprises:
obtaining, by the first network device, the BGP-LS message in response to being configured with the first NRP.

25. The method according to claim 24, wherein that the network device is configured with the first NRP comprises:
the first network device receives configuration information of the first NRP delivered by the controller, wherein the configuration information comprises at least the NRP description information.

26. The method according to claim 25, wherein the method further comprises:
reserving, by the first network device, the resource for the first NRP based on the configuration information of the first NRP, and determining the status information of the first NRP based on a result of reserving the resource for the first NRP, wherein if the resource is successfully reserved for the first NRP, the status information of the first NRP indicates that the resource of the first NRP is available, or if the resource fails to be reserved for the first NRP, the status information of the first NRP indicates that the resource of the first NRP is unavailable; and
correspondingly, the obtaining, by the first network device, the border gateway protocol link-state BGP-LS message comprises:
obtaining, by the first network device, the BGP-LS message comprising the status information of the first NRP.

27. The method according to any one of claims 15 to 23, wherein the obtaining, by the first network device, the border gateway protocol link-state BGP-LS message comprises:
obtaining, by the first network device, the BGP-LS message in response to a failure of the interface associated with the first NRP or unavailability of a resource associated with the first NRP.

28. The method according to any one of claims 15 to 27, wherein the NRP description information further indicates a second NRP associated with the first link.

29. An apparatus for reporting network resource partition information, used in a first network device, wherein the apparatus comprises:
a processing unit, configured to obtain a border gateway protocol link-state BGP-LS message, wherein the BGP-LS message comprises first network layer reachability information NLRI, the first NLRI comprises link description information and network resource partition NRP description information, the link description information indicates a first link, and the NRP description information indicates a first NRP associated with the first link; and
a sending unit, configured to send the BGP-LS message to a controller.

30. An apparatus for reporting network resource partition information, used in a first network device, wherein the apparatus comprises:
a processing unit, configured to obtain a border gateway protocol link-state BGP-LS message, wherein the BGP-LS message comprises first network layer reachability information NLRI, the first NLRI comprises node description information and network resource partition NRP description information, the node description information indicates the first network device, and the NRP description information indicates a first NRP associated with the first network device; and
a sending unit, configured to send the BGP-LS message to a controller.

31. A device, comprising a processor and a memory, wherein
the memory is configured to store instructions or a computer program; and
the processor is configured to execute the instructions or the computer program, to perform the method according to any one of claims 1 to 28.

32. A computer-readable storage medium, comprising instructions or a computer program, wherein when the instructions or the computer program is run on a computer, the computer is enabled to perform the method according to any one of claims 1 to 28.

33. A computer program product, comprising a computer program, wherein when the computer program product runs on a processor, the method according to any one of claims 1 to 28 is performed.
